(19) Europäisches Patentamt
European Patent Office
Office européen des brevets

(11) **EP 2 536 604 B1**

(12) **EUROPÄISCHE PATENTSCHRIFT**

(45) Veröffentlichungstag und Bekanntmachung des Hinweises auf die Patenterteilung:
**28.10.2015 Patentblatt 2015/44**

(21) Anmeldenummer: **10795304.4**

(22) Anmeldetag: **15.12.2010**

(51) Int Cl.:
**B60T 1/10** *(2006.01)*    **B60T 7/04** *(2006.01)*
**B60T 7/12** *(2006.01)*    **B60T 8/32** *(2006.01)*
**B60T 8/40** *(2006.01)*    **B60T 13/10** *(2006.01)*
**B60T 13/74** *(2006.01)*    **B60T 8/1755** *(2006.01)*

(86) Internationale Anmeldenummer:
**PCT/EP2010/069692**

(87) Internationale Veröffentlichungsnummer:
**WO 2011/098175 (18.08.2011 Gazette 2011/33)**

(54) **VERFAHREN ZUM BETREIBEN EINES BREMSKRAFTVERSTÄRKTEN HYDRAULISCHEN BREMSSYSTEMS EINES FAHRZEUGS UND STEUERVORRICHTUNG FÜR EIN BREMSKRAFTVERSTÄRKTES HYDRAULISCHES BREMSSYSTEM EINES FAHRZEUGS**

METHOD FOR OPERATING A BRAKE BOOSTED HYDRAULIC BRAKING SYSTEM OF A VEHICLE, AND CONTROL DEVICE FOR A BRAKE BOOSTED HYDRAULIC BRAKING SYSTEM OF A VEHICLE

PROCÉDÉ POUR FAIRE FONCTIONNER UN SYSTÈME DE FREINAGE HYDRAULIQUE ASSISTÉ D'UN VÉHICULE ET DISPOSITIF DE COMMANDE POUR UN SYSTÈME DE FREINAGE HYDRAULIQUE ASSISTÉ D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2010 DE 102010001941**

(43) Veröffentlichungstag der Anmeldung:
**26.12.2012 Patentblatt 2012/52**

(73) Patentinhaber: **Robert Bosch GmbH**
**70442 Stuttgart (DE)**

(72) Erfinder:
• **VOLLERT, Herbert**
  **71665 Vaihingen/Enz (DE)**
• **KNEIP, Frank**
  **74360 Ilsfeld (DE)**

(56) Entgegenhaltungen:
DE-A1- 19 912 866    DE-A1-102004 027 256
DE-A1-102007 000 264    DE-A1-102007 030 441
DE-A1-102007 062 839    DE-A1-102008 035 180
US-A1- 2005 269 875    US-A1- 2009 115 242
US-A1- 2009 261 649

**Beschreibung**

Die Erfindung betrifft ein Verfahren zum Betreiben eines bremskraftverstärkten hydraulischen Bremssystems eines Fahrzeugs. Des Weiteren betrifft die Erfindung eine Steuervorrichtung für ein bremskraftverstärktes hydraulisches Bremssystem eines Fahrzeugs.

Stand der Technik

Um einem Fahrer eines Fahrzeugs ein komfortables Betätigen eines Bremseingabeelements eines Bremssystems, wie beispielweise eines Bremspedals, zu ermöglichen, weist ein Bremssystem in der Regel einen Bremskraftverstärker auf. Das Bremssystem mit einem Bremskraftverstärker wird oft als bremskraftverstärktes Bremssystem bezeichnet.

Ein Bremskraftverstärker ist dazu ausgelegt, eine Unterstützungskraft bereitzustellen, welche zusätzlich zu einer von dem Fahrer auf das Bremseingabeelement ausgeübten Fahrerbremskraft das Abbremsen mindestens eines Rads bewirkt. Geeignete Bremskraftverstärker sind beispielsweise in der US 2009/0115242 A1, in der DE 10 2005 024 577 A1, der DE 10057 557 A1 und in der DE 103 27 553 A1 beschrieben.

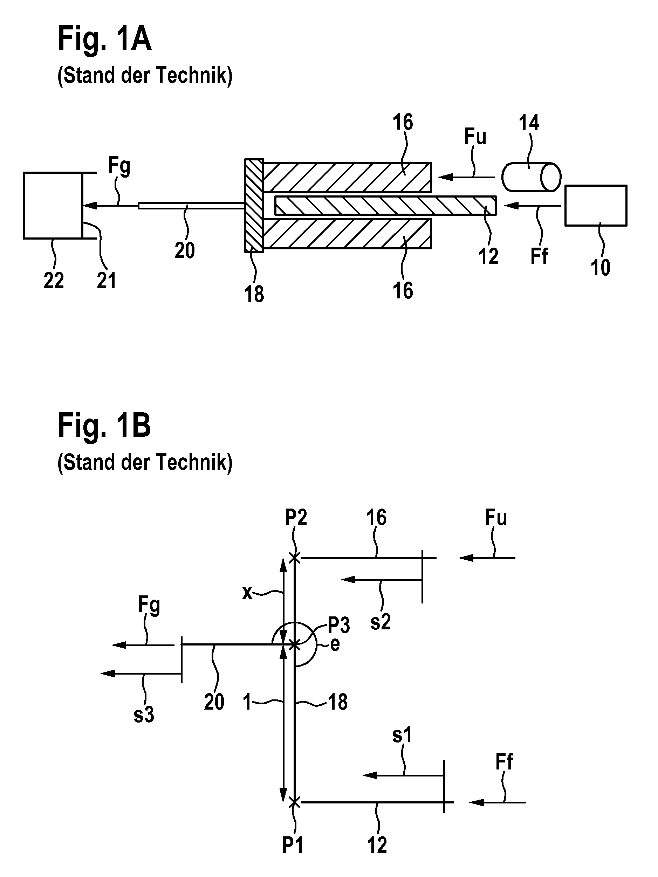

Fig. 1A und 1B zeigen schematische Darstellungen zum Erläutern einer Funktionsweise eines herkömmlichen Bremskraftverstärkers.

Das in Fig. 1A teilweise schematisch wiedergegebene Bremssystem weist ein Bremseingabeelement 10 auf, welches beispielsweise als Bremspedal ausgebildet ist. Über ein Betätigen des Bremseingabeelements 10 kann der Fahrer eine Fahrerbremskraft Ff und einen ersten Verstellweg s1 auf eine weiterleitende Komponente des Bremssystems, beispielsweise auf einen Eingangskolben 12, ausüben (siehe Ersatzschaltbild der Fig. 1 B). Zusätzlich ist die Fahrerbremskraft Ff über eine (nicht skizzierte) Bremseingabeelement-Sensorik erfassbar. Die Bremseingabeelement-Sensorik umfasst beispielsweise einen Kraftsensor zum Messen der Fahrerbremskraft Ff und/oder einen Wegsensor zum Ermitteln des ersten Verstellwegs s1 einer verstellbaren Komponente des Bremseingabeelements 10.

Das Bremssystem weist zusätzlich einen Bremskraftverstärker 14 auf. Der Bremskraftverstärker 14 ist dazu ausgelegt, eine Unterstützungskraft Fu bereitzustellen, damit der Fahrer die zum Abbremsen seines Fahrzeugs benötigte Kraft nicht vollständig als Fahrerbremskraft Ff aufbringen muss. Die von dem Bremskraftverstärker 14 bereitgestellte Unterstützungskraft Fu kann beispielsweise eine Funktion der Fahrerbremskraft Ff sein.

Das Bremseingabeelement 10 und der Bremskraftverstärker 14 sind so in dem Bremssystem angeordnet, dass zumindest die Fahrerbremskraft Ff und die Unterstützungskraft Fu eine Gesamtbremskraft Fg bewirken. Die Gesamtbremskraft Fg kann jedoch noch mindestens eine weitere Kraft umfassen. Beispielsweise überträgt der Bremskraftverstärker 14 die Unterstützungskraft Fu und einen zweiten Verstellweg s2 auf einen Unterstützungskolben 16, welcher zusammen mit dem Eingangskolben 12 an ein Kraft-Einkoppelelement, wie die gezeigte Reaktionsscheibe 18, gekoppelt ist. In dem Ersatzschaltbild der Fig. 1B wirken der Eingangskolben 12 auf einen ersten Punkt P1 und der Unterstützungskolben 16 auf einen zweiten Punkt P2 der Reaktionsscheibe 18. Wie der Fachmann erkennt, können die Punkte P1 und P2 Flächen entsprechen. Beispielsweise entspricht der Punkt P2 bei einem rohrförmigen Unterstützungskolben 16 einer Ringfläche.

Auf diese Weise sind die Gesamtbremskraft Fg und ein dritter Verstellweg s3 auf eine ausgangsseitig von dem Kraft-Einkoppelelement angeordnete Komponente, wie beispielsweise auf den Ausgangskolben 20, übertragbar. Dabei berührt der Ausgangskolben 20 die Reaktionsscheibe 18 an einem dritten Punkt P3, bzw. an einer entsprechenden Fläche.

Ein Quotient x gibt das Verhältnis eines ersten Abstands zwischen den Punkten P2 und P3 und eines zweiten Abstands zwischen den Punkten P3 und P1 an. Im Falle einer elastischen Reaktionsscheibe 18 wird diese bei einer Fahrerbremskraft Ff ≠ 0 und/oder einer Unterstützungskraft Fu ≠ 0 deformiert (in Fig. 1B nicht dargestellt). Die Verbiegbarkeit der Reaktionsscheibe 18 kann als Elastizität e angegeben werden.

Der Ausgangskolben 20 ist an eine verstellbare Komponente 21 eines Hauptbremszylinders 22, gekoppelt. An dem Hauptbremszylinder 22 ist ein mit einem Bremsmedium gefüllter (nicht skizzierter) Bremskreis mit mindestens einem Radbremszylinder angeschlossen. Durch eine Veränderung eines Bremsdrucks in dem mindestens einen Radbremszylinder kann auf das mindestens eine zugeordnete Rad ein der Gesamtbremskraft Fg entsprechendes hydraulisches Bremsmoment, bzw. eine entsprechende hydraulische Bremskraft, ausgeübt werden.

Des Weiteren ist in der DE 10 2007 030 441 A1 ein Bremssystem für ein Kraftfahrzeug mit einem Generator und ein entsprechendes Verfahren zum Betreiben eines Bremssystems mit einem Generator beschrieben. Wirkt zusätzlich zu einem hydraulischen Bremsmoment ein Generator-Bremsmoment auf mindestens ein Rad, so soll eine Simulationseinheit derart angesteuert werden, dass ein dem Generator-Bremsmoment entsprechendes Hydraulikfluidvolumen aus dem Bremssystem entnommen und in mindestens eine Speicherkammer der Simulationseinheit zwischengespeichert wird, um das hydraulische Bremsmoment um das Generator-Bremsmoment zu reduzieren. Entsprechend soll bei einem Deaktivieren des Generator-Bremsmoments das Hydraulikfluidvolumen für eine Erhöhung des hydraulischen Bremsmoments in das Hydraulikbremssystem zurück verschoben werden.

Offenbarung der Erfindung

Die Erfindung schafft ein Verfahren zum Betreiben eines bremskraftverstärkten hydraulischen Bremssystems eines Fahrzeugs mit den Merkmalen des Anspruchs 1 und eine Steuervorrichtung für ein bremskraftverstärktes hydraulisches Bremssystem eines Fahrzeugs mit den Merkmalen des Anspruchs 4.

Vorteilhafte Ausführungsformen des Verfahrens und der Steuervorrichtung sind in den Unteransprüchen beschrieben.

Die vorliegende Erfindung ermöglicht ein Anpassen der Unterstützungskraft des Bremskraftkraftverstärkers an die mindestens eine auf mindestens ein Rad des Fahrzeugs ausgeübte Zusatz-Bremskraft, insbesondere in vorteilhaften Ausführungsformen ein Kompensieren und/oder ein Verblenden der mindestens einen Zusatz-Bremskraft mittels der angepassten Unterstützungskraft. Ebenso kann über die Volumenverschiebung zwischen der mindestens einen Speicherkammer des mindestens einen Plungers und/oder des mindestens einen Zwei-Kammern-Zylinders und dem speicherexternen Volumen des Bremssystems eine gegenüber dem Stand der Technik optimiertere Stellung/Reaktionsfähigkeit des von dem Fahrer betätigten Bremseingabeelements trotz der Variierung der Unterstützungskraft realisiert werden. Dies gewährleistet einen verbesserten Bedienkomfort für den Fahrer bei einem Betätigen des Bremseingabeelements zum Vorgeben des gewünschten Soll-Gesamtbremsmoments des Fahrzeugs.

Das erfindungsgemäße Verfahren und die korrespondierende Steuervorrichtung sind an einem kostengünstigen Bremssystem mit einem einfachen Aufbau anwendbar. Insbesondere wird zum Ausführen des Verfahrens und zum Verwenden der Steuervorrichtung keine teure Sensorik für das Bremssystem benötigt.

Durch die Verwendung mindestens eines Plungers und/oder mindestens eines Zwei-Kammern-Zylinders ist ein Einfüllen oder Entnehmen eines Bremsmediums in oder aus der mindestens einen Speicherkammer nicht mit einem für den Fahrer wahrnehmbaren Lärm und/oder mit einem für den Fahrer spürbaren Verstellen (Vibrieren) des Bremseingabeelements verbunden. Dies ist mit einer signifikanten Verbesserung der NVH-Werte (Noise-Vibration-Harshness) des Bremssystems verbunden. Insbesondere ermöglicht der mindestens eine Plunger und/oder der mindestens eine Zwei-Kammern-Zylinder ein "weiches" Verschieben eines Bremsmediumvolumens in oder aus dem mindestens einen Speichervolumen. Dieses "weiche" Verschieben ist vorteilhafter Weise für den Fahrer weder hör- noch spürbar, ohne dass ein zwischen dem mindestens einen Plunger und/oder dem mindestens einen Zwei-Kammern-Zylinder und dem Hauptbremszylinder benötigtes Trennventil zu schließen ist. Dies kann insbesondere dazu verwendet werden, auf ein Anbringen eines derartigen Trennventils an dem Bremssystem zu verzichten.

Beispielsweise ist, wie anhand der nachfolgenden Ausführungsformen genauer erläutert wird, mittels der vorliegenden Erfindung das Verblenden der mindestens einen ausgeübten Zusatzkraft ausführbar, ohne dass der Fahrer davon über eine Rückwirkung, wie beispielsweise ein "Mitziehen" oder "Reinziehen" des Bremseingabeelements, spürt. Gleichzeitig kann der Fahrer auch während eines Anwendens der erfindungsgemäßen Technologie aktiv und direkt in den mindestens einen Radbremszylinder seines Bremssystems "hineinbremsen". Tritt der Fahrer beispielsweise während eines Ausführens der erfindungsgemäßen Technologie nach, so kann die volle Unterstützungskraft des Bremskraftverstärkers zusätzlich für ein schnelles Aufbauen eines hohen hydraulischen Bremsmoments genutzt werden.

Die vorliegende Erfindung weist insbesondere gegenüber der DE 10 2007 030 441 A1 den Vorteil auf, dass das Verblenden des zusätzlichen Generator-Bremsmoments bereits vor einer Ausübung der Gesamtbremskraft auf die verstellbare Komponente des Hauptbremszylinders erfolgt. Durch die entsprechende Reduzierung der Supportkraft am Bremskraftverstärker wird der Vordruck, beziehungsweise das vom Hauptbremszylinder verschobene Volumen reduziert. Auf diese Weise ist auch das in die mindestens eine Speicherkammer zu verschiebende Volumen reduzierbar. Dies ermöglicht eine Reduzierung der Größe der Speicherkammer gegenüber einer zum Ausführen der Technologie der DE 10 2007 030 441 A1 benötigten herkömmlichen Speicherkammer. Durch die Einsparung des Bauraums können zusätzliche Komponenten einfacher am Fahrzeug verbaut werden. Gleichzeitig kann die von dem mindestens einen Bremsmediumförderelement, wie beispielsweise einem Elektromotor eines Plungers, auszuführende Leistung reduziert werden. Somit können kostengünstigere Pumpen, Ventile, Plunger und/oder Zwei-Kammern-Zylinder verwendet werden. Ein schnell auszuführendes Rückfördern von Volumen aus der mindestens einen Speicherkammer, welches mit einer deutlich erhöhten Motorleistung verbunden ist, ist für ein schnelles Aufbauen eines hohen hydraulischen Bremsmoments nicht notwendig.

Durch die Verwendung mindestens eines Plungers und/oder mindestens eines Zwei-Kammern-Zylinders sind zusätzlich als Alternative zu der Verwendung eines Drucksensors eine Druckschätzung und/oder eine Druckberechnung mittels der Ansteuersignale und gegebenenfalls Messsignale des mindestens einen Plungers und/oder des mindestens einen Zwei-Kammern-Zylinders möglich. Geeignete Ansteuer- und/oder Messsignale sind beispielsweise ein Ansteuerstrom und/oder eine Wegmessungs-Signal an einem verstellbaren Element des mindestens einen Plungers und/oder des mindestens einen Zwei-Kammern-Zylinders.

EP 2 536 604 B1

Kurze Beschreibung der Zeichnungen

Weitere Merkmale und Vorteile der vorliegenden Erfindung werden nachfolgend anhand der Figuren erläutert. Es zeigen:

Fig. 1A und 1B    schematische Darstellungen zum Erläutern einer Funktionsweise eines herkömmlichen Bremskraftverstärkers;

Fig. 2    ein Flussdiagramm zum Darstellen einer ersten Ausführungsform des Verfahrens;

Fig. 3    eine schematische Darstellung einer Ausführungsform der Steuervorrichtung;

Fig. 4    eine schematische Darstellung einer ersten Ausführungsform des bremskraftverstärkten hydraulischen Bremssystems;

Fig. 5    eine schematische Darstellung eines ersten Ausbildungsbeispiels für einen Plunger des hydraulischen Bremssystems;

Fig. 6    eine schematische Darstellung eines zweiten Ausführungsbeispiels für einen Plunger des hydraulischen Bremssystems;

Fig. 7    eine schematische Darstellung einer zweiten Ausführungsform des bremskraftverstärkten hydraulischen Bremssystems; und

Fig. 8A bis 8D    schematische Darstellungen eines Kopplungsmechanismus eines Bremssystems zum Darstellen einer zweiten Ausführungsform des Verfahrens.

Ausführungsformen der Erfindung

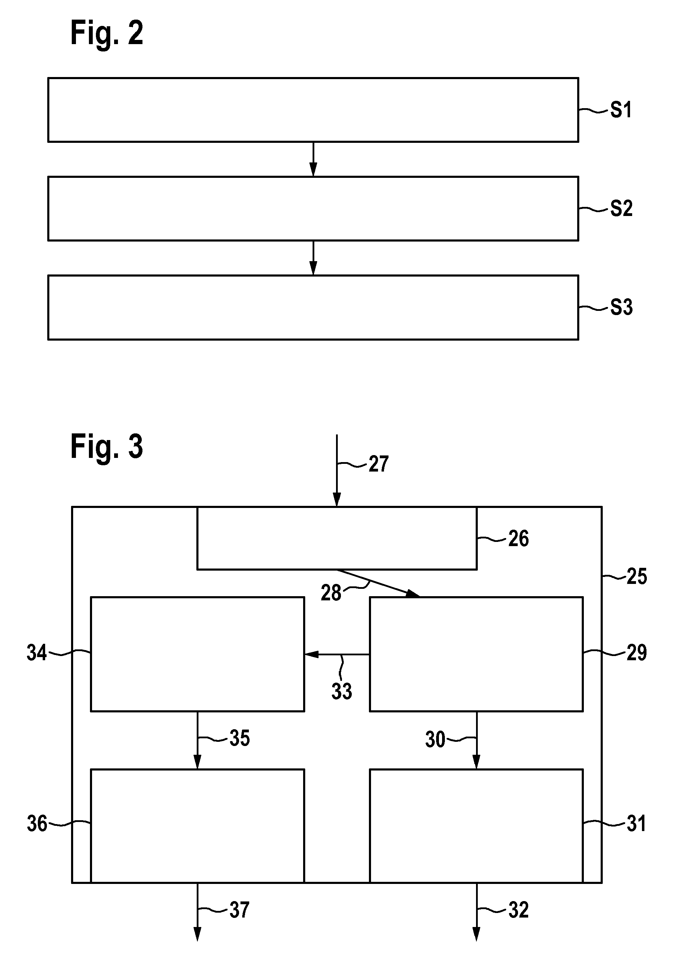

Fig. 2 zeigt ein Flussdiagramm zum Darstellen einer ersten Ausführungsform des Verfahrens.
In einem Verfahrensschritt S1 wird eine Information bezüglich einer Zu- oder Abnahme mindestens einer zusätzlich zu einer hydraulischen Bremskraft des Bremssystems auf mindestens ein Rad des Fahrzeugs ausgeübten Zusatz-Bremskraft ermittelt. Die Information kann eine Größe, ein Signal und/oder einen Messwert umfassen, welche beschreiben, dass zusätzlich zu dem hydraulischen Bremsmoment des Bremssystems mindestens eine zusätzliche Kraft auf das mindestens eine Rad ausgeübt wird. Beispielsweise kann als Information eine Information bezüglich zumindest einer Zu- oder Abnahme eines Generator-Bremsmoments, einer Reibungskraft und/oder einer Hangabtriebskraft ermittelt werden. Eine derartige Information kann beschreiben, ob auf das mindestens eine Rad ein Bremsmoment eines fahrzeugeigenen Generators, eine extreme Reibungskraft und/oder eine Hangabtriebskraft ungleich Null wirkt und/oder ob deren Zu- oder Abnahme größer als eine vorgegebenen Mindestdifferenz ist. Die vorgegebene Mindestdifferenz kann jedoch auch gleich Null sein. Als Alternative oder als Ergänzung dazu kann bei dem Ermitteln der Information auch ermittelt werden, ob das Fahrzeug im Stillstand vorliegt.
In einem Verfahrensschritt S2 wird, sofern die Zu- oder Abnahme größer als eine vorgegebene Mindestgröße ist, eine Unterstützungskraft, welche von einem zusammen mit einem Bremseingabeelement an ein Kraft-Einkoppelelement gekoppelten Bremskraftverstärker bereitgestellt wird, um eine Kraftdifferenz geändert. Das Ändern der Unterstützungskraft erfolgt unter Berücksichtigung der ermittelten Information so, dass die hydraulische Bremskraft korrespondierend zu der Zu- oder Abnahme der Zusatz-Bremskraft geändert wird.
Beispielsweise kann, sofern als Information eine Information bezüglich zumindest einer Zu- oder Abnahme eines Generator-Bremsmoments, einer Reibungskraft und/oder einer Hangabtriebskraft ermittelt wird, die Unterstützungskraft um eine die Zu- oder Abnahme des Generator-Bremsmoments, der Reibungskraft und/oder der Hangabtriebskraft kompensierende Kraftdifferenz geändert werden. Insbesondere kann auf diese Weise die Unterstützungskraft des Bremskraftverstärkers so verändert werden, dass die Summe aus dem hydraulischen Bremsmoment und dem Generator-Bremsmoment gleich dem Soll-Gesamtbremsmoment ist. Ebenso kann die Unterstützungskraft so neu festgelegt werden, dass trotz einer extrem niedrigen Reibungskraft, wie beispielsweise bei einem Fahren auf Glatteis, aufgrund der Anpassung des hydraulischen Bremsmoments das Soll-Gesamtbremsmoment gewährleistbar ist. Als Alternative oder als Ergänzung dazu kann auch trotz einer extremen Hangabtriebskraft, insbesondere bei einem Bremsen auf einer schiefen Ebene, die Unterstützungskraft so festgelegt werden, dass trotz der extrem großen Hangabtriebskraft die von dem Fahrer gewünschte Fahrzeugverzögerung eingehalten wird.
Des Weiteren kann, wenn als Information ermittelt wird, dass das Fahrzeug im Stillstand mit einer als der mindestens einen Zusatz-Bremskraft wirkenden Haftreibungskraft vorliegt, die Unterstützungskraft um eine Kraftdifferenz gleich der Unterstützungskraft reduziert werden. Auf diese Weise kann bei einem Stillstand des Fahrzeugs der Energieverbrauch des Bremskraftverstärkers reduziert werden.

Anschließend wird in einem Verfahrensschritt S3 ein Volumens eines Bremsmediums des Bremssystems zwischen mindestens einer Speicherkammer mindestens eines Plungers und/oder mindestens eines Zwei-Kammern-Zylinders und einem speicherexternen Volumen des Bremssystems unter Berücksichtigung der ermittelten Information so verschoben, dass eine Ausgleichkraft korrespondierend zu der Kraftdifferenz auf das Bremseingabeelement ausgeübt wird. Die Berücksichtigung der ermittelten Information kann auch bedeuten, dass eine von der ermittelten Information abgeleitete Größe berücksichtigt wird. Unter dem speicherexternen Volumen des Bremssystems kann ein Volumen zumindest eines Teilbereichs des Bremssystems außerhalb der mindestens einen Speicherkammer verstanden werden, welches so mit der Speicherkammer verbunden ist, dass ein Befüllen oder Entleeren der Speicherkammer zu einer Druckabnahme oder zu einer Druckzunahme in dem speicherexternen Volumen führt. Man kann das speicherextern Volumen auch als ein speicherexternes Restvolumen des Bremssystems, welches einen Bremsmediumaustausch mit der Speicherkammer ausführen kann, bezeichnen.

In einer bevorzugten Ausführungsform des Verfahrens erfolgt die Festlegung der Soll-Volumenverschiebung derart, dass die Ausgleichkraft eine aus der Kraftdifferenz der Unterstützungskraft resultierende auf das Bremseingabeelement ausgeübte Verstellkraft kompensiert. Auf eine einfach ausführbare Möglichkeit zum Ausführen der Verfahrensschritte S1 bis S3 wird unten genauer eingegangen.

Das in den oberen Absätzen beschriebene Verfahren ist beispielsweise bei einem regenerativen Bremssystem zum Verblenden eines zeitlich variierenden Generator-Bremsmoments anwendbar. Ebenso kann das hier beschriebene Verfahren verwendet werden, um bei einem Stillstand des Fahrzeugs die von dem Bremskraftverstärker ausgeübte Unterstützungskraft zu reduzieren und auf diese Weise Energie einzusparen. Die Anwendbarkeit des hier beschriebenen Verfahrens ist jedoch nicht auf die aufgezählten Beispiele beschränkt.

Fig. 3 zeigt eine schematische Darstellung einer Ausführungsform der Steuervorrichtung.

Die in Fig. 3 schematisch dargestellte Steuervorrichtung 25 weist eine Eingabeeinrichtung 26 auf, welche dazu ausgelegt ist, eine Information 27 bezüglich einer Zu- oder Abnahme mindestens einer zusätzlich zu einer hydraulischen Bremskraft des Bremssystems auf mindestens ein Rad des Fahrzeugs ausgeübten Zusatz-Bremskraft zu empfangen. Die Eingabeeinrichtung 26 ist zusätzlich dazu ausgelegt, sofern die Zu- oder Abnahme der Zusatz-Bremskraft größer als eine vorgegebene Mindestdifferenz ist, mindestens ein der Information entsprechendes Empfangssignal 28 bereitzustellen.

Eine erste Auswerteeinrichtung 29 der Steuervorrichtung 25 ist dazu ausgelegt, eine Soll-Kraftänderungsgröße bezüglich einer Soll-Änderung einer Unterstützungskraft, welche von einem zusammen mit einem Bremseingabeelement an ein Kraft-Einkoppelelement gekoppelten Bremskraftverstärker bereitstellbar ist, unter Berücksichtigung des mindestens einen Empfangssignals 28 festzulegen. Bezüglich vorteilhafter Möglichkeiten für ein geeignetes Festlegen der Soll-Kraftänderungsgröße durch die erste Auswerteeinrichtung 29 wird auf die oben und unten beschriebenen Beispiele verwiesen. Anschließend gibt die erste Auswerteeinrichtung 29 ein der festgelegten Soll-Kraftänderungsgröße entsprechendes erstes Auswertesignal 30 an eine erste Ansteuereinrichtung 31 der Steuervorrichtung aus.

Die erste Ansteuereinrichtung 31 ist dazu ausgelegt, ein der festgelegten Soll-Kraftänderungsgröße entsprechendes erstes Steuersignal 32 an den (nicht dargestellten) Bremskraftverstärker auszugeben. Auf das Ansteuern des Bremskraftverstärkers mittels der ersten Ansteuereinrichtung 31 wird unten noch genauer eingegangen. Auf diese Weise ist realisierbar, dass die Unterstützungskraft um eine der festgelegten Soll-Kraftänderungsgröße entsprechende Kraftdifferenz und die hydraulische Bremskraft korrespondierend zu der Zu- oder Abnahme der Zusatz-Bremskraft änderbar sind.

Bei der dargestellten Ausführungsform ist die erste Auswerteeinrichtung 29 zusätzlich dazu ausgelegt, ein zweites Auswertesignal 33 an eine zweite Auswerteeinrichtung 34 der Steuervorrichtung 25 bereitzustellen. Das zweite Auswertesignal 33 kann zumindest einen Teil der empfangenen Information 27 und/oder die festgelegte Soll-Kraftänderungsgröße umfassen. Die zweite Auswerteeinrichtung 34 ist dazu ausgelegt, eine Soll-Volumenverschiebungsgröße bezüglich einer Soll-Volumenverschiebung eines Bremsmediums des Bremssystems zwischen mindestens einer Speicherkammer mindestens eines Plungers und/oder mindestens eines Zwei-Kammern-Zylinders und einem speicherexternen Volumen des Bremssystems unter Berücksichtigung des zweiten Auswertesignals 33, d.h. unter indirekter Berücksichtigung des mindestens einen Empfangssignals 28, festzulegen. Vorteilhafte Möglichkeiten zum Festlegen einer Soll-Volumenverschiebungsgröße, welche die Änderung der Unterstützungskraft, und damit einer Gesamtbremskraft, so kompensiert, dass der Fahrer keine veränderte Stellung/Funktionsweise des Bremseingabeelements spürt, sind unten beschrieben.

Nach dem Festlegen der Soll-Volumenverschiebungsgröße gibt die zweite Auswerteeinrichtung 34 ein drittes Auswertesignal 35 an eine zweite Ansteuereinrichtung 36 der Steuervorrichtung 25 aus. Die zweite Ansteuereinrichtung 36 ist mittels des dritten Auswertesignals 35 derart aktivierbar, dass ein der festgelegten Soll-Volumenverschiebungsgröße entsprechendes zweites Steuersignal 37 an mindestens ein (nicht skizziertes) Bremsmediumförderelement des Bremssystems ausgegeben wird. Bevorzugter Weise ist das mindestens eine Bremsmediumförderelement mittels des zweiten Steuersignals 37 derart ansteuerbar, dass ein Bremsmediumvolumen entsprechend der Soll-Volumenverschiebungsgröße zwischen der mindestens einen Speicherkammer und dem speicherexternen Volumen des Bremssystems mittels des Bremsmediumförderelements verschiebbar ist.

Auf diese Weise ist gewährleistet, dass ein Volumen des Bremsmediums entsprechend der festgelegten Soll-Volumenverschiebungsgröße zwischen der mindestens einen Speicherkammer und dem speicherexternen Volumen des Bremssystems verschiebbar und eine Ausgleichkraft korrespondierend zu der Kraftdifferenz auf das Bremseingabeelement ausübbar sind. Insbesondere kann mittels des verschobenen Bremsmediumvolumens die über das erste Steuersignal 32 angesteuerte Änderung der auf die verstellbare Komponente des Hauptbremszylinders ausgeübten Gesamtbremskraft aus zumindest der Unterstützungskraft und der Fahrerbremskraft kompensiert werden. In diesem Fall kann das verschobene Bremsmediumvolumen eine Ausgleichskraft bewirken, welche die Auswirkungen der neu festgelegten Gesamtbremskraft auf das Bremseingabeelement kompensiert.

In einer vorteilhaften Ausführungsform kann die zweite Ansteuereinrichtung 36 beispielsweise dazu ausgelegt sein, mittels des zweiten Steuersignals 37 mindestens einen Plunger-Motor als das mindestens eine Bremsmediumförderelement anzusteuern. Als Alternative oder als Ergänzung dazu kann die zweite Ansteuereinrichtung 36 auch dazu ausgelegt sein, mittels des zweiten Steuersignals 37 mindestens eine Pumpe und/oder mindestens ein Ventil als das mindestens eine Bremsmediumförderelement unter Berücksichtigung der festgelegten Soll-Volumenverschiebungsgröße anzusteuern. Dies erfolgt vorzugsweise so, dass über eine Volumenzunahme einer ersten Kammer des mindestens einen Zwei-Kammern-Zylinders das Volumen entsprechend der Soll-Volumenverschiebungsgröße von einer zweiten Kammer des mindestens einen Zwei-Kammern-Zylinders in das speicherexterne Volumen verschiebbar ist. Entsprechend kann mittels der zweiten Ansteuereinrichtung 36 auch ein Ventil so ansteuerbar sein, dass eine Volumenabnahme der ersten Kammer über ein Abfließen des Bremsmediums durch das angesteuerte Ventil aus der ersten Kammer eine der Soll-Volumenverschiebungsgröße entsprechende Bremsmediumverschiebung aus dem speicherexternen Volumen in die zweite Kammer auslöst. Auf vorteilhafte Ausführungsformen für einen mittels des zweiten Steuersignals 37 entsprechend ansteuerbaren Plunger und/oder Zwei-Kammern-Zylinder wird unten noch genauer eingegangen.

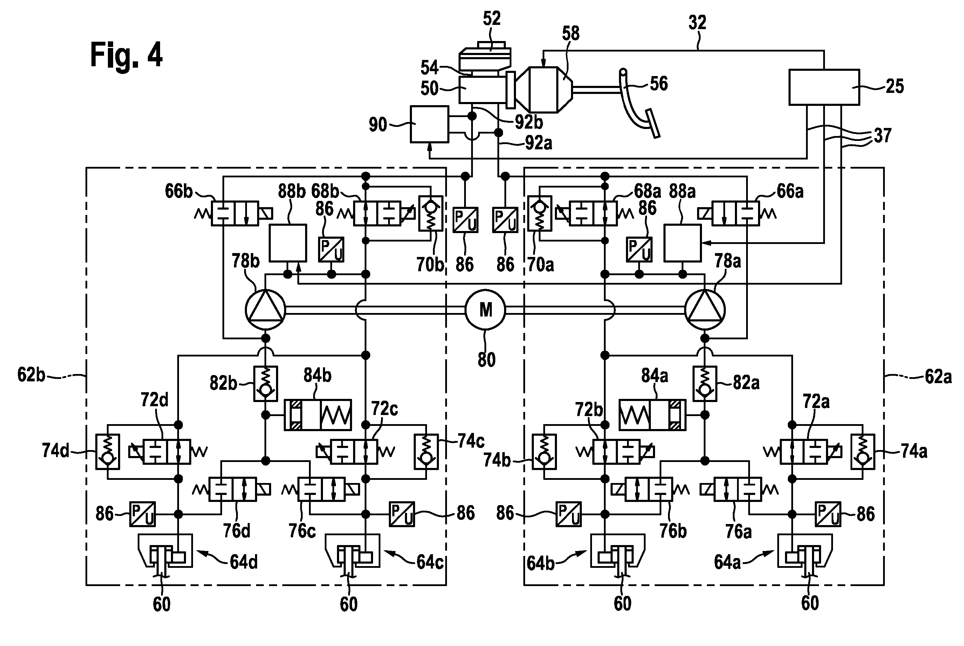

Fig. 4 zeigt eine schematische Darstellung einer ersten Ausführungsform des bremskraftverstärkten hydraulischen Bremssystems.

Das in Fig. 4 schematisch dargestellte hydraulische Bremssystem für ein Fahrzeug umfasst einen Hauptbremszylinder 50, mit welchem ein Bremsmediumreservoir 52 über mindestens einen Verbindungskanal 54 verbunden ist. Ein beispielsweise als Bremspedal ausgebildetes Bremseingabeelement 56 ist derart an den Hauptbremszylinder 50 gekoppelt, dass ein Fahrer des Fahrzeugs mit dem hydraulischen Bremssystem über ein Betätigen des Bremseingabeelements 56 eine Druckänderung in dem Hauptbremszylinder 50 bewirken kann. Zur Unterstützung des Fahrers ist ein Bremskraftverstärker 58 derart an den Hauptbremszylinder 50 gekoppelt, dass bei einer Betätigung des Bremseingabeelements 56 durch den Fahrer eine Gesamtbremskraft aus zumindest der auf das Bremseingabeelement 56 ausgeübten Fahrerbremskraft und einer von dem Bremskraftverstärker 58 bereitgestellten Unterstützungskraft eine Druckänderung in dem Hauptbremszylinder 50 bewirken kann. Somit ist die zum Abbremsen mindestens eines Rads 60 des Fahrzeugs von dem Fahrer aufzubringende Fahrerbremskraft reduzierbar. Der Bremskraftverstärker 58 kann beispielsweise als elektromechanischer Bremskraftverstärker (i-Booster) oder als hydraulischer Bremskraftverstärker ausgebildet sein. Bevorzugter Weise ist der Bremskraftverstärker 58 als steuerbarer/regelbarer Bremskraftverstärker ausgebildet, was noch weitere Nutzungen des Bremskraftverstärkers 58 erlaubt.

An den Hauptbremszylinder 50 ist mindestens ein Bremskreis 62a und 62b so angebunden, dass ein Bremsmedium zwischen dem Hauptbremszylinder 50 und dem mindestens einen Bremskreis 62a oder 62b strömen kann. Ein derartiger Bremskreis 62a oder 62b umfasst mindestens einen Radbremszylinder 64a bis 64d. Der dargestellte Bremskreis weist zwei Bremskreise 62a und 62b mit jeweils zwei Radbremszylindern 64a bis 64d auf. Es wird jedoch darauf hingewiesen, dass die Realisierbarkeit des hier wiedergegebenen hydraulischen Bremssystems nicht auf eine bestimmte Anzahl von Bremskreisen 62a und 62b mit einer fest vorgegebenen Anzahl von Radbremszylindern 64a bis 64d begrenzt ist. Ebenso ist die achsweise, radindividuelle oder diagonale Zuordnung der Bremskreise 62a und 62b des Bremssystems an die mindestens vier Räder 60 des Fahrzeugs beliebig. In einer weiteren Ausführungsform kann das hydraulische Bremssystem auch drei Bremskreise für eine X-Bremskreisaufteilung haben.

Bei dem in Fig. 4 dargestellten Bremssystem sind die beiden Bremskreise 62a und 62b identisch ausgeführt. Das Bremssystem ist jedoch nicht auf die identische Ausbildung seiner Bremskreise 62a und 62b beschränkt. Die Ausstattung der dargestellten Bremskreise 62a und 62b mit je einem Hochdruckschaltventil 66a und 66b, je einem Umschaltventil 68a und 68b mit einem parallel dazu angeordneten Rückschaltventil 70a und 70b, jeweils einem Radeinlassventil 72a bis 76d mit einem parallel dazu angeordneten Rückschlagventil 74a bis 74d und einem Radauslassventil 76a bis 76d pro Radbremszylinder 64a bis 64d, sowie einer Pumpe 78a oder 78b, wobei beide Pumpen 78a und 78b auf einer gemeinsamen Welle eines Motors 80 liegen, ist hier nur beispielhaft dargestellt. Das hier wiedergegebene Bremssystem ist nicht auf eine Ausstattung seiner Bremskreise 62a oder 62b mit den Komponenten 72a bis 78b, bzw. auf ihre hier dargestellte Ankopplung aneinander, beschränkt. Auch die Ausstattung eines jeden Bremskreises 62a und 62b mit je einem weiteren Rückschlagventil 82a oder 82b und einer Speicherkammer 84a oder 84b, welche zwischen der Ansaugseite einer Pumpe 78a oder 78b und den zugehörigen Radauslassventilen 76a bis 76d angeordnet sind, ist lediglich beispielhaft zu interpretieren. Ebenso sind die dargestellten Drucksensoren 86 in ihrer Gesamtanzahl pro Bremskreis 62a oder 62b und ihrer Anordnung darin optional zu interpretieren, da sie nicht vorhanden sein müssen. Der mindestens einen Drucksensor 86 kann beispielsweise ein Hz-Drucksensor und/oder ein Kreisdrucksensor sein.

Jeder der dargestellten Bremskreise 62a und 62b weist einen eigenen Plunger 88a oder 88b auf, welcher benachbart zu der Förderseite der zugeordneten Pumpe 78a oder 78b angeordnet ist. Ein weiterer Plunger 90 weist je eine Durchströmöffnung zu den zwei an den Hauptbremszylinder 50 angekoppelten Zuführleitungen 92a und 92b der beiden Bremskreise 62a und 62b auf. Es wird darauf hingewiesen, dass die Ausstattung des hier wiedergegebenen Bremssystems nicht auf eine bestimmte Anzahl der Plunger 88a, 88b und 90 oder deren Anordnung an oder in dem mindestens einen Bremskreis 62a oder 62b beschränkt ist. Jeder der Plunger 88a, 88b und 90 kann als Bremsmediumförderelement mit einem eigenen eingebauten Speichervolumen des Bremssystems angesehen werden, mittels welchem ein Bremsmediumvolumen zwischen dem mindestens einen Speichervolumen des Plungers 88a, 88b oder 90 und dem speicherexternen Volumen des mindestens einen zugeordneten Bremskreises 62a und 62b verschiebbar ist. Nachfolgend werden zwei vorteilhafte Ausführungsbeispiele für die Plunger 88a, 88b und 90 beschrieben.

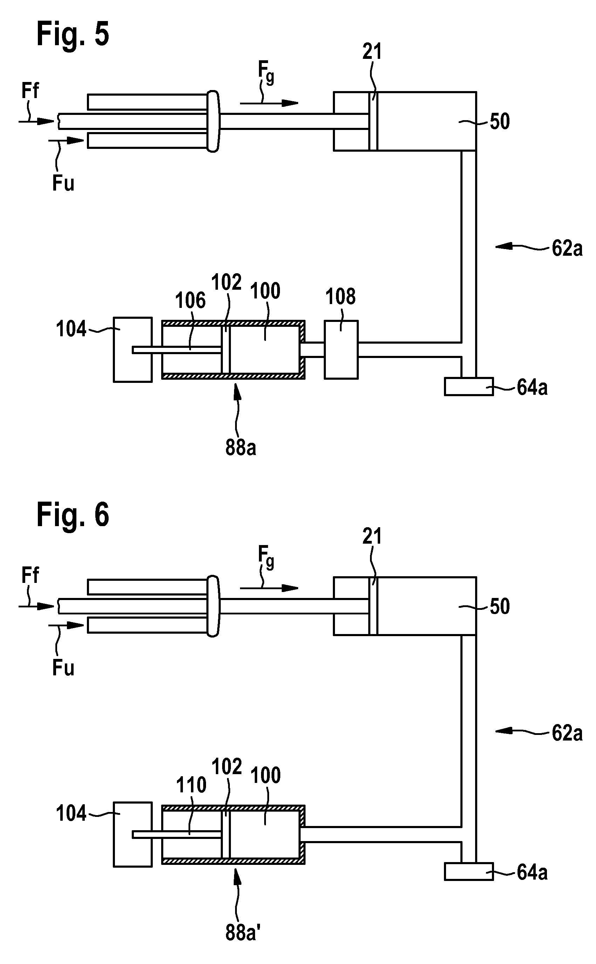

Fig. 5 zeigt eine schematische Darstellung eines ersten Ausbildungsbeispiels für einen Plunger des hydraulischen Bremssystems.

Der in Fig. 5 schematisch wiedergegebene Plunger 88a weist eine Plunger-Speicherkammer 100 und einen mittels einer Ankopplung 106 an eine verstellbare Wandkomponente 102 der Plunger-Speicherkammer 100 angekoppelten Plunger-Motor 104 auf. Durch die Ankopplung 106 zwischen dem Plunger-Motor 104 und der verstellbaren Wandkomponente 102 ist das Volumen der Plunger-Speicherkammer 100, bzw. die in die Plunger-Speicherkammer 100 eingefüllte Bremsmediummenge, steuerbar.

Zur zusätzlichen Steuerung eines Bremsmediumstroms zwischen der Plunger-Speicherkammer 100 und einem (schematisch, nur teilweise wiedergegebenen) speicherexternen Volumen des Bremskreises 62a ist eine Ventileinheit 108 eingangsseitig an dem Plunger 88a angeordnet. Die Ventileinheit 108 kann beispielsweise als Rückschlagventil, Schaltventil oder als Regelventil ausgebildet sein. Der Plunger 88a und die Ventileinheit 108 können auch einstückig ausgebildet sein. Auf die Ansteuerung des Plungers 88a und der Ventileinheit 108 wird unten genauer eingegangen.

Somit ist ein hydraulischer Druck in dem Hauptbremszylinder 50 (Vordruck) und/oder eine Stellung der verstellbaren Komponente 21 des Hauptbremszylinders 50 nicht nur über eine Gesamtbremskraft Fg, welche sich zumindest aus einer Fahrerbremskraft Ff und/oder einer Unterstützungskraft Fu des Bremskraftverstärkers ergibt, sondern auch über eine Betätigung des Plunger-Motors 104 und der Ventileinheit 108 steuerbar. Somit besteht die Möglichkeit, unabhängig von einer von dem Fahrer aufgebrachten Fahrerbremskraft Ff und/oder einer von dem Bremskraftverstärker bereitgestellten Unterstützungskraft Fu den hydraulischen Druck in dem Hauptbremszylinder 50 (Vordruck) und/oder die Verstellung der verstellbaren Komponente 21 des Hauptbremszylinders 50 zu ändern. Auf die sich daraus ergebenden Vorteile wird unten genauer eingegangen.

Fig. 6 zeigt eine schematische Darstellung eines zweiten Ausführungsbeispiels für einen Plunger des hydraulischen Bremssystems.

Der Plunger 88a' ist aufgrund einer selbsthemmenden Ankopplung 110 des Plunger-Motors 104 an die verstellbare Wandkomponente 102 der Plunger-Speicherkammer 100 so ausgebildet, dass ein unerwünschtes Füllen der Plunger-Speicherkammer 100 aus dem Bremssystem, bzw. ein ungewolltes Zurückschieben des Plungers 88'a zumindest bis zu einem relevanten Druck verhindert ist. Man kann dies auch so bezeichnen, dass der Plunger 88'a selbsthemmend ausgebildet ist. Ein derartiger Plunger 88'a gewährleistet ebenfalls die im Weiteren aufgeführten Vorteile.

Anstelle oder zusätzlich zu den oberen Beispielen sind auch andere Ausführungsbeispiele für einen Plunger, beispielsweise mit zusätzlichem Getriebe, verwendbar.

Die hier beschriebenen Beispiele für Plunger 88a und 88a' sind auf einfache Weise in das in der Figur 4 dargestellte Bremssystem integrierbar. Ein derartiges bremskraftverstärktes hydraulisches Bremssystem kann zusätzlich mit einem ABS-Aggregat, mit einem ESP-Aggregat, mit einem EHB-System und/oder mit einem anders ausgebildeten Bremsregelsystem ausgestattet werden. Aufgrund der hydraulischen Verbindung zwischen dem mindestens einen Plunger 88a, 88b und/oder 90 und dem Hauptbremszylinder 50 kann der Plunger, wie nachfolgend genauer beschrieben wird, verwendet werden, um den Bedienkomfort des Bremseingabeelements 56 für den Fahrer zu verbessern.

Das hydraulische Bremssystem der Figur 4 weist auch die oben schon beschriebene Steuervorrichtung 25 auf. Mittels des ersten Steuersignals 32 ist der Bremskraftverstärker 58 vorzugsweise so ansteuerbar, dass bei einem Empfangen einer Information bezüglich einer zusätzlich zu dem hydraulischen Bremsmoment des Bremssystems auf das mindestens eine Rad 60 ausgeübten Zusatz- Bremskraft über der Vergleichsgröße die von dem Bremskraftverstärker 56 bereitgestellte Unterstützungskraft so geändert wird, dass die Gesamtbremskraft aus zumindest der Unterstützungskraft und der Fahrerbremskraft ein verändertes hydraulisches Bremsmoment in dem mindestens einen Radbremszylinder 64 bis 64d bewirkt, welches zusammen mit der Zusatz-Bremskraft ein bevorzugtes Soll-Gesamtbremsmoment ergibt. Beispielsweise kann dazu an dem Bremseingabeelement 56 auch ein Kraft- und/oder Wegsensor angeordnet sein, welcher ein Fahrerbremswunsch-Signal an die Steuervorrichtung 25 zusätzlich bereitstellt. In diesem Fall ist die Steuervorrichtung 25 zusätzlich dazu ausgelegt, beim Festlegen der Soll-Kraftänderungsgröße das Fahrerbremswunsch-Signal ebenfalls zu berücksichtigen und ein an die Betätigung des Bremseingabeelements 56 angepasstes erstes Steuersignal 32 an den Bremskraftverstärker 58 auszugeben.

Über das zweite Steuersignal 37 können die Plunger 88a, 88b und 90 so angesteuert werden, dass eine Druckänderung in dem Hauptbremszylinder 50 aufgebaut wird, welche dazu führt, dass das Bremseingabeelement 56 trotz einer signifikanten Änderung der Unterstützungskraft in einer bevorzugten Stellung verbleibt. Das Ansteuern der Plunger 88a, 88b und 90 über das zweite Steuersignal 37 kann unter Berücksichtigung der Druck-Volumen-Kennlinie der Bremskreise 62a und 62b, sowie unter zusätzlicher Berücksichtigung der bezüglich der Ankopplung des Bremseingabeelement 56 an den Bremskraftverstärker 58 und an den Hauptbremszylinder relevanten Größen erfolgen (siehe unten).

Herkömmlicher Weise ist eine Veränderung der von dem Bremskraftverstärker 58 bereitgestellten Unterstützungskraft manchmal mit einem "Mitziehen" des Bremseingabeelements 56, beispielsweise des Bremspedals, verbunden. Dies wird bei einem Einbremsen des Fahrers häufig als irritierend empfunden, da sich die Eigenschaften des Bremseingabeelements entsprechend verändert haben. Der Fahrer spürt beispielsweise bei Berührung des Bremspedals in diesem Fall eine unerwartete Bremspedalstellung. Bei der hier beschriebenen erfindungsgemäßen Technologie wird jedoch über die unten genauer beschriebene Ausgleichsfunktion der Plunger 88a, 88b und 90 eine Ausgleichkraft bereitgestellt, welche bewirken kann, dass das Bremseingabeelement 56 trotz einer Änderung der Unterstützungskraft in einer bevorzugten (standardgemäßen) Stellung verbleibt.

Die erfindungsgemäße Technologie des Bremssystems der Figur 4 wird nachfolgend anhand eines Anwendungsbeispiels zum Verblenden eines rekuperativen (regenerativen) Bremsens beschrieben. Es wird jedoch darauf hingewiesen, dass die erfindungsgemäße Technologie entsprechend auch für ein Anpassen des hydraulischen Bremsmoments an eine niedrige Reibung an mindestens einem der Räder 60, an eine extrem große Hangabtriebskraft und/oder an einem aktuellen Stillstand des Fahrzeugs möglich ist.

Bei dem hier beschriebenen Anwendungsbeispiel übt ein Generator auf mindestens eines der Räder 60, vorzugsweise auf eine Achse des Fahrzeugs, ein zusätzliches Generator-Bremsmoment aus. Das Generator-Bremsmoment kann, beispielsweise aufgrund seiner Abhängigkeit von der aktuellen Geschwindigkeit des Fahrzeugs und/oder seiner Abhängigkeit von einem Ladezustand einer über den Generator aufladbaren Fahrzeugbatterie, zeitlich variieren. Vereinfachend kann angenommen werden, dass die aktuelle Fahrzeugverzögerung sich aus dem hydraulischen Bremsmoment des bremskraftverstärkten hydraulischen Bremssystems und dem Generator-Bremsmoment ergibt.

Über das erste Steuersignal 32 der Steuervorrichtung 25 kann die Unterstützungskraft des Bremskraftverstärkers 58 so angepasst werden, dass die Fahrzeugverzögerung einem ermittelbaren Fahrerbremswunsch des Fahrers entspricht. Beispielsweise wird dazu bei einem Zunehmen des Generator-Bremsmoments, insbesondere bei einem Einblenden des Generators, die Unterstützungskraft des Bremskraftverstärkers 58 so reduziert, dass die Fahrzeugverzögerung bei einer gleichmäßigen Betätigung des Bremseingabeelements 56 durch den Fahrer konstant bleibt. Entsprechend kann bei einem Reduzieren des Generator-Bremsmoments, wie beispielsweise bei einem Ausblenden des Generators, die Unterstützungskraft des Bremskraftverstärkers 58 erhöht werden, so dass insbesondere bei einem konstanten Betätigen des Bremseingabeelements 56 die gewünschte Fahrzeugverzögerung eingehalten wird. Entsprechend kann die Unterstützungskraft des Bremskraftverstärkers auch bei einer ungleichmäßigen Betätigung des Bremseingabeelements 56 durch den Fahrer an das Generator-Bremsmoment so angepasst werden, dass die aktuelle Fahrzeugverzögerung dem ermittelbaren Fahrerbremswunsch entspricht.

Wird beispielsweise bei einem Einblenden des Generators die Unterstützungskraft des Bremskraftverstärkers 58 reduziert, so wird jedoch der Druck in dem Hauptbremszylinder 50 und den beiden Bremskreisen 62a und 62b geringer, als dies der Fahrer aufgrund der auf das Bremseingabeelement 56 ausgeübten Kraft erwarten würde. Auch das in die Radbremszangen der Radbremszylinder 64a bis 64d verschobene Volumen ist in diesem Fall aufgrund der reduzierten Gesamtbremskraft geringer. Die Abweichung des verschobenen Volumens entspricht dabei den pV-Kennlinien der Radbremszylinder 64a bis 64d. Dies bedeutet, dass herkömmlicher Weise ein im Vergleich zu der Fahrerbremskraft größeres Volumen im Hauptbremszylinder 50 verbleibt, und der Pedalweg somit aufgrund der von dem Hauptbremszylinder 50 auf das Bremseingabeelement 56 ausgeübten Rückwirkkraft kürzer ist. Der Fahrer empfindet dies häufig derart, dass das Bremseingabeelement in einer ungewohnt herausragenden Stellung vorliegt.

Durch das Ansteuern der Plunger 88a, 88b und 90 mittels des zweiten Steuersignals 37 kann jedoch ein zusätzliches Bremsmediumvolumen in die Speicherkammer der Plunger 88a, 88b und 90 verschoben werden. Dies bewirkt ein "Hineinziehen" oder "Hineinfallen" des Bremseingabeelements 56. Der Pedalweg passt sich somit der Fahrerbremskraft an. Dieses Anpassen des Pedalwegs und der Stellung des Bremseingabeelements 56 ist für den Fahrer mit einem zusätzlichen Bedienkomfort verbunden.

Die in den oberen beiden Absätzen beschriebenen Verfahrensschritte sind entsprechend auch auf ein durch eine Abnahme des Generator-Bremsmoments ausgelöste Erhöhung der Unterstützungskraft des Bremskraftverstärkers 58 anwendbar. Bei einer entsprechenden Abstimmung der Steuersignale 32 und 37, d.h. des Änderns der Unterstützungskraft und der Verschiebung des Bremsmediumvolumens zwischen der mindestens einen Speicherkammer und dem speicherexternen Volumen, kann man trotz einer Änderung des hydraulischen Bremsmoments/hydraulischen Bremsdrucks im Bremssystem ein für den Fahrer neutrales Kraft-Weg-Verhalten des Bremseingabeelements 56 einstellen.

Durch die Verwendung des mindestens einen Plungers 88a, 88b und 90 ist die dabei ausgeführte Bremsmediumverschiebung mit einer minimalen Geräuschbelastung verbunden. Insbesondere ist somit ein "weiches" Verschieben des Bremsmediums möglich, welches der Fahrer weder über ein "Zittern" noch über einen "Rückstoß" des Bremseingabeelements 56 bemerkt. Das Verblenden des zeitlich variierenden Generator-Bremsmoments hat somit keine Auswirkungen auf den Bedienkomfort des Bremseingabeelements 56 für den Fahrer.

Sofern der mindestens eine Plunger 88a, 88b und 90 ein vorgeschaltetes Ventil aufweist, kann dieses vorteilhaft mit einem Rückschlagventil derart ausgebildet sein, dass eine Förderung des Plungervolumens in den Bremskreis 62a oder 62b auch bei einem geschlossenen Hauptsitz des Ventils möglich ist. Somit kann das Volumen auch bei einem Ausfall des Ventils, beispielsweise aufgrund eines fehlerhaften Dauerbestromens, welches ein Schließen bewirkt, oder bei einem Zuklemmen des Ventils, immer noch von dem mindestens einen Plunger 88a, 88b und 90 in den zugehörigen Bremskreis 62a der 62b zurückbefördert werden. Ein potentielles Unterbremsen aufgrund eines "fehlenden" Volumens ist somit verhinderbar.

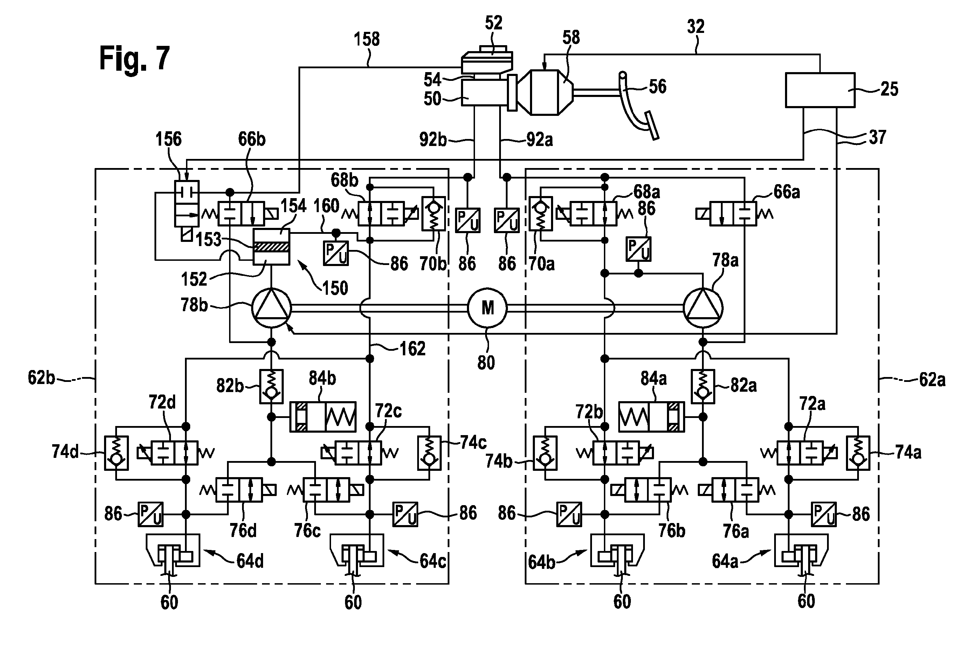

Fig. 7 zeigt eine schematische Darstellung einer zweiten Ausführungsform des bremskraftverstärkten hydraulischen Bremssystems.

Das in Fig. 7 schematisch wiedergegebene Bremssystem weist die schon beschriebenen Komponenten 50 bis 86 und 92a und 92b auf. Anstelle eines Plungers ist der zweite Bremskreis 62b jedoch mit einem Zwei-Kammern-Zylinder 150 ausgestattet. In einer Weiterbildung des dargestellten Bremssystems kann auch der erste Bremskreis 62a mit einem derartigen Zwei-Kammern-Zylinder ausgestattet werden.

Der Zwei-Kammern-Zylinder 150 umfasst eine erste Kammer 152 und eine zweite Kammer 154. Eine Trennwand zwischen den beiden Kammern 152 und 154 umfasst ein verschiebbares Trennelement 153, so dass ein Gesamtvolumen der beiden Kammern 152 und 154 bei einer Vergrößerung/Verkleinerung einer der beiden Kammern 152 und 154 konstant bleibt. Die erste Kammer 152 ist zu einer Förderseite der Pumpe 78b des zweiten Bremskreises 62b ausgerichtet. Über ein Betreiben der Pumpe 78b ist somit ein Bremsmediumvolumen in die erste Kammer 152 des Zwei-Kammern-Zylinders 150 pumpbar. Des Weiteren ist eine Öffnung der ersten Kammer 152 über ein Ventil 156 mit einer Reservoirleitung 158 verbunden, welche in das Bremsmediumreservoir 52 mündet. Somit kann bei einem Vorliegen des Ventils 156 in einem geöffneten Zustand ein Bremsmediumvolumen aus der ersten Kammer 152 über die Reservoirleitung 158 in das Bremsmediumreservoir 52 strömen.

Die zweite Kammern 154 des Zwei-Kammern-Zylinders 150 ist über eine Zwischenleitung 160 an eine Leitung 162 gekoppelt, welche über das Umschaltventil 68b die Radeinlassventile 72c und 72d mit der Zufuhrleitung 92b verbindet. Somit kann bei einem geöffneten Umschaltventil 68b und geschlossenen Radeinlassventilen 72c und 72d ein Bremsmediumvolumen zwischen der zweiten Kammer 154 des Zwei-Kammern-Zylinders 150 und dem Hauptbremszylinder 50 verschoben werden.

Nachfolgend wird das vorteilhafte Zusammenwirken der Steuervorrichtung 25, des Zwei-Kammern-Zylinders 150, des Ventils 156 und der Pumpe 78b zum Verblenden eines zeitlich variierenden Generators-Bremsmoments beschrieben. Selbstverständlich können die Komponenten 25, 78b, 150 und 156 auch zum Kompensieren einer niedrigen Reibungskraft auf mindestens eines der Räder 60, einer extremen Hangabtriebskraft und/oder zum Reduzieren eines Energieverbrauchs des Bremskraftverstärkers 58 bei einem Stillstand des Fahrzeugs verwendet werden.

Im Falle eines abnehmenden Generator-Bremsmoments kann ein von dem Fahrer vorgegebenes Soll-Gesamtbremsmoment eingehalten werden, indem über das erste Steuersignal 32 der Bremskraftverstärker 58 so angesteuert wird, dass eine größere Unterstützungskraft bereitgestellt wird. Somit nimmt die Gesamtbremskraft aus der Unterstützungskraft und der Fahrerbremskraft auch bei einer konstanten Betätigung des Bremseingabeelements 56 durch den Fahrer zu. Aufgrund der größeren Gesamtbremskraft baut sich in dem Hauptbremszylinder 50 ein größerer Druck auf. Dieser größere Druck bewirkt eine höhere Rückstellkraft auf das Bremseingabeelement 56. Um dies zu vermeiden kann man über eine Volumenaufnahme einen Druckabbau in dem Hauptbremszylinder bewirken. Dazu kann über ein Öffnen des Ventils 156 eine hydraulische Verbindung zwischen dem Bremsmediumreservoir 52 und der ersten Kammer 152 des Zwei-Kammern-Zylinders 150 geöffnet werden. Somit kann das Bremsmedium über die geöffnete hydraulische Verbindung von der ersten Kammer 152 in das Bremsmediumreservoir 52 abfließen. Durch die entstehende Druckverminderung in der ersten Kammer 152 erfolgt ein Verschieben des Trennelements 153 zwischen den beiden Kammern 152 und 154. Die zweite Kammer nimmt somit ein bestimmtes Bremsmediumvolumen aus dem speicherexternen Volumen des zweiten Bremskreises 62b auf.

Bei einer Abnahme des Generator-Bremsmoments kann die Unterstützungskraft entsprechend mittels des ersten Steuersignals 32 gesteigert werden. Möchte man einen zusätzlichen Druck- oder Volumenaufbau im Bremssystem über das zweite Steuersignal 37 realisieren, so kann über ein entsprechendes an die Pumpe 78b ausgegebenes zweites Steuersignal 37 Volumen aus dem Bremsmediumreservoir 53 gesaugt werden. Ein derartiges Ansaugen von Volumen aus dem Bremsmediumreservoir 52 ist insbesondere gewährleistet, sofern ein entsprechendes (nicht skizziertes) zweites Steuersignal 37 zum Öffnen auch an das Hochdruckschaltventil ausgegeben wird. Als Alternative zu einer Volumenaufnahme aus dem Bremsmediumreservoir 52 ist auch eine Volumenaufnahme aus der Speicherkammer 84b realisierbar.

Durch ein Pumpen eines Bremsmediumvolumens in die erste Kammer 152 wird der Druck in dieser entsprechend erhöht. Durch die bewirkte Druckerhöhung wird das Trennelement 153 zwischen den Kammern 152 und 154, beispielsweise ein Kolben, verschoben. Dadurch entsteht ein Druckaufbau in der zweiten Kammer 154, welcher eine Volumenverschiebung aus der zweiten Kammer 154 in das speicherexterne Volumen bewirkt.

Ein wesentlicher Vorteil der hier beschriebenen erfindungsgemäßen Technologie ist, dass die Pulsationen der Pumpe durch den als Dämpfer fungierenden Zwei-Kammern-Zylinder 150 reduziert/minimiert werden. Da für die Druckaufbaudynamik hauptsächlich der Bremskraftverstärker 58, insbesondere ein regelbarer oder steuerbarer Bremskraftverstärker 58, verwendet wird, ist die Dynamik eines Zwei-Kammern-Zylinders 150 für diese Anwendungsmöglichkeit ausreichend.

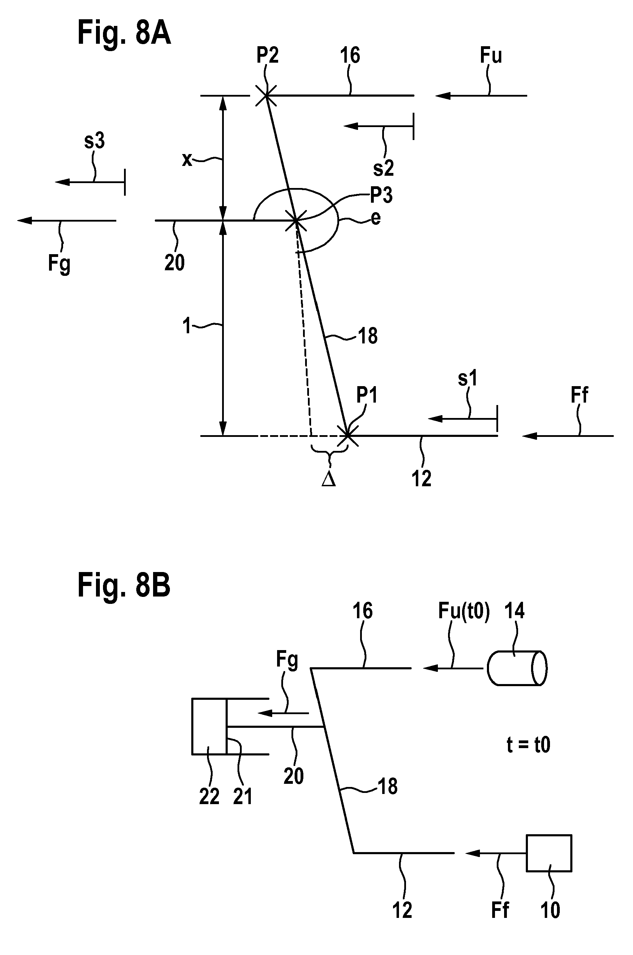

Fig. 8A bis 8D zeigen schematische Darstellungen eines Kopplungsmechanismus eines Bremssystems zum Darstellen einer zweiten Ausführungsform des Verfahrens.

Durch das im Weiteren beschriebene Verfahren zur hydraulischen Bremskraftänderung in einem hydraulischen Bremssystem mit einem Bremskraftverstärker 14 in Verbindung mit einer hydraulischen Kammer eines Plungers und/oder eines Zwei-Kammern-Zylinders ist ein Kraft-Weg-neutrales Verblenden und/oder Kompensieren eines zusätzlichen Bremsmoments möglich unter Gewährleistung eines guten Bedienkomforts des mindestens einen Bremseingabeelements des zugehörigen Bremssystems.

Der dargestellte Kopplungsmechanismus umfasst die schon beschriebenen Komponenten 10 bis 22. Es wird jedoch darauf hingewiesen, dass die Ausführbarkeit des Verfahrens nicht auf einen derartigen Kopplungsmechanismus beschränkt ist. Beispielsweise kann anstelle der Reaktionsscheibe 18 auch ein anderes Kraft-Einkoppelelement zum Addieren der Fahrerbremskraft Ff und der Unterstützungskraft Fu zu der Gesamtbremskraft Fg eingesetzt werden. Dabei kann die Gesamtbremskraft Fg noch mindestens eine zusätzliche Kraft, auf welche im Folgenden nicht eingegangen wird, umfassen. Des Weiteren ist die Ausführbarkeit des Verfahrens nicht auf eine bestimmte Ausführungsform eines mit einem Bremsgas oder einer Bremsflüssigkeit gefüllten Bremskreises beschränkt. Beispielsweise sind verschiedene Alternativmöglichkeiten bezüglich des Volumenmanagements im Bremssystem denkbar.

Der Bremskraftverstärker 14 kann beispielsweise ein elektromechanischer Bremskraftverstärker, ein Vakuum-Bremskraftverstärker und/oder ein hydraulischer Bremskraftverstärker sein. Selbstverständlich können auch mehrere Bremskraftverstärker 14 zum Bereitstellen der Unterstützungskraft Fu eingesetzt werden. Der Bremskraftverstärker 14 ist vorzugsweise für eine stellbare/regelbare Bremskraftunterstützung ausgelegt. Bevorzugter Weise ist der Bremskraftverstärker 14 dazu ausgelegt, die Unterstützungskraft Fu als Funktion von der Fahrerbremskraft Ff und/oder dem ersten Verstellweg s1 festzulegen. Dem Fachmann ist damit nahegelegt, dass die Ausführbarkeit des Verfahrens nicht auf einen bestimmten Typ des Bremskraftverstärkers 14 beschränkt ist.

Fig. 8A zeigt ein Ersatzmodell zum Darstellen einer Deformation der Reaktionsscheibe 18 bei einer Fahrerbremskraft Ff ≠ 0 und einer Unterstützungskraft Fu ≠ 0. Die Punkte P1 bis P3 entsprechen Flächen auf der Reaktionsscheibe 18. Wird der Punkt P1 im Bezug auf den Punkt P3 um eine Verbiegegröße Δ der Reaktionsscheibe 18 verstellt, so gilt:

$$(\text{Gl 1}) \qquad s1 = s3 + \Delta$$

Ein Verstellen des Ausgangskolbens 20 um den dritten Verstellweg s3 bewirkt somit in der Regel ein Verstellen des Eingangskolbens 12 und des Bremseingabeelements 10 um den ersten Verstellweg s1.

Aus dem Momentengleichgewicht an der Reaktionsscheibe 18 erhält man:

$$(\text{Gl 2}) \qquad \Delta * e = Ff - x * Fu$$

Durch Einsetzten der Gleichung (Gl 2) in die Gleichung (Gl 1) erhält man deshalb:

$$(\text{Gl 3}) \qquad s1 = s3 + (Ff - x * Fu)/e$$

Die Relation entsprechend der Gleichung (Gl 3) zwischen dem ersten Verstellweg s1 des Bremseingabeelements 10 und dem dritten Verstellweg s3 des Ausgangskolbens 20 führt herkömmlicher Weise häufig zu einer Beeinträchtigung des Betätigungskomforts des Bremseingabeelements 10. Beispielsweise kann aufgrund der Relation eine Druckänderung in dem Hauptbremszylinder 22 und/oder in dem Bremskreis zu einer für den Fahrer irritierenden Bewegung des Bremseingabeelements 10 führen. Über das nachfolgend beschriebene Verfahren ist dieser Nachteil unterbindbar.

Beispielhaft soll angenommen werden, dass das hier beschriebene Verfahren für ein Verblenden eines Generator-Bremsmoments verwendet wird. Die Anwendbarkeit des Verfahrens ist jedoch nicht auf dieses Ausführungsbeispiel beschränkt.

Fig. 8B zeigt den Kopplungsmechanismus mit den Komponenten 10 bis 22 zu einem Zeitpunkt t = t0 vor einem Beginn des Verfahrens. Der Anschaulichkeit wegen wird nachfolgend davon ausgegangen, dass der Fahrer zum Zeitpunkt t0 und während des gesamten Verfahrens auf das Bremseingabeelement 10 eine zeitlich konstante Fahrerbremskraft Ff und einen zeitlich konstanten ersten Verstellweg s1 ausübt. Entsprechend werden zum Zeitpunkt t0 eine zeitlich konstante Unterstützungskraft Fu und ein zeitlich konstanter zweiter Verstellweg s2 von dem Bremskraftverstärker 14 bereitgestellt. (Die von dem Bremskraftverstärker 14 bereitgestellte Unterstützungskraft Fu ist im Allgemeinen ohne einen zusätzlich auszuführenden Messschritt bekannt.) Das im Weiteren beschriebene Verfahren ist jedoch nicht auf eine zeitlich konstante Betätigung des Bremseingabeelements 10 durch den Fahrer beschränkt.

Auf mindestens ein dem Bremskreis zugeordnetes Rad wirkt somit ein konstantes hydraulisches Bremsmoment Mh proportional zu der Gesamtbremskraft Fg, wobei sich das hydraulische Bremsmoment Mh aus einem Bremsdruck p (entsprechend der Gesamtbremskraft Fg) und einer Konstante C ergibt:

$$(\text{Gl } 4) \qquad Mh = C * p$$

Zu einem Zeitpunkt t > t0 wird ein Zusatz-Bremsmoment Mz aktiviert. Das Zusatz-Bremsmoment Mz ist beispielsweise ein Generator-Bremsmoment. Anstelle eines Generator-Bremsmoments kann jedoch auch ein anderes Zusatz-Bremsmoment Mz über das beschriebene Verfahren verblendet werden.

Das Gesamtbremsmoment Mg(t > t0) setzt sich somit aus dem hydraulischen Bremsmoment Mh(t > t0) und dem Zusatz-Bremsmoment Mz(t > t0) zusammen:

$$(\text{Gl } 5) \qquad Mg(t > t0) = Mh(t > t0) + Mz(t > t0),$$

Das im Weiteren beschriebene Verfahren ist auch ausführbar, sofern beispielsweise ein Generator-Bremsmoment reduziert wird und Mz(t > t0) negativ ist.

Trotz des Zusatz-Bremsmoments Mz(t > t0) ≠ 0 ist es wünschenswert, bei einer konstanten Betätigung des Bremseingabeelements 10 durch den Fahrer ein Gesamtbremsmoment Mg(t > t0) = Mg(t0) einzuhalten. Dazu werden die oben schon beschriebenen Verfahrensschritte S1 bis S3 ausgeführt.

Beispielsweise wird in dem Verfahrensschritt S2 direkt oder indirekt eine Druckdifferenz Δp ermittelt, um welche der Bremsdruck p in den Radbremszylindern geändert werden kann, damit ein konstantes Gesamtbremsmoment Mg(t > t0) = Mg(t0) eingehalten wird. Beispielsweise kann für die Druckdifferenz Δp gelten:

$$(\text{Gl } 6) \qquad \Delta p = Mz(t > t0)/C$$

Das gewünschte Einhalten des konstanten Gesamtbremsmoments Mg(t > t0) ist gewährleistet, sofern der Bremsdruck p über den Vordruck im Hauptbremszylinder 22 um die Druckdifferenz Δp geändert wird. Dabei ist es vorteilhaft, den Vordruck über eine Änderung der Gesamtbremskraft Fg um eine Soll-Bremskraftänderung ΔFg zu ändern, mit

$$(\text{Gl } 7) \qquad \Delta Fg = A * Mz(t > t0)/C,$$

wobei A einer Fläche des Hauptbremszylinders 22 entspricht.

Da eine Änderung der Fahrerbremskraft Ff zum Bewirken der Soll-Bremskraftänderung ΔFg nicht erwünscht ist, wird die von dem Bremskraftverstärker 14 bereitgestellte Unterstützungskraft Fu entsprechend der Soll-Bremskraftänderung ΔFg verändert. Somit gilt für eine Soll-Unterstützungskraftänderung ΔFu:

$$\text{(Gl 8)} \qquad \Delta Fu = A * Mz(t > t0)/C$$

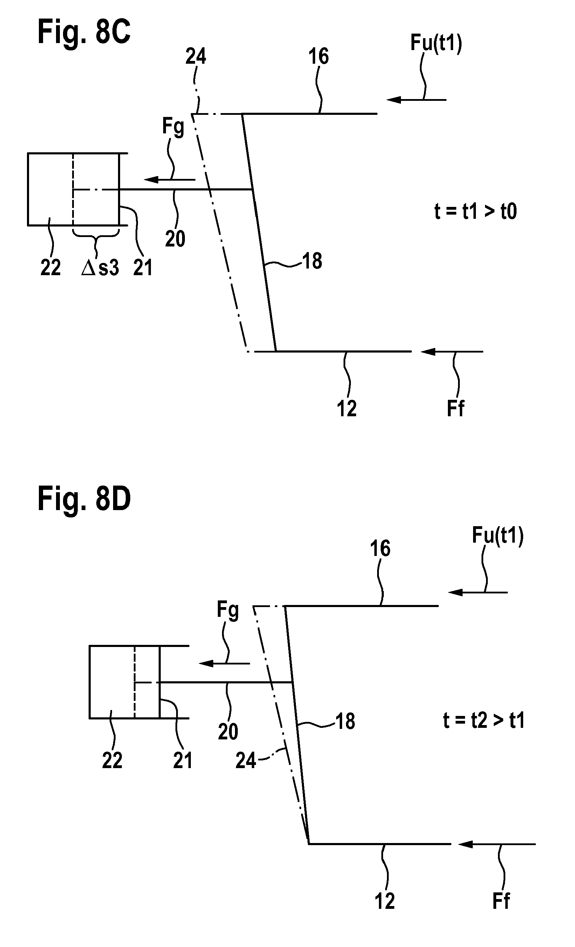

Fig. 8C zeigt den Koppelmechanismus nach dem Ausführen der Verfahrensschritte S1 und S2 zu einem Zeitpunkt t1 > t0. Somit ist zum Zeitpunkt t1 der Bremsdruck p vorzugsweise so eingestellt, dass das zum Zeitpunkt t1 an mindestens einem Rad anliegende Gesamtbremsmoment Mg(t1) dem Gesamtbremsmoment Mg(t0) zum Zeitpunkt t0 entspricht, d.h. es gilt: Mg(t1) = Mg(t0)

Entsprechend der zeitlich konstanten Fahrerbremskraft Ff wird ein gleichmäßiges Abbremsen des Fahrzeugs eingehalten. Die Unterstützungskraft Fu(t1) zum Zeitpunkt t1 entspricht einer Differenz der Unterstützungskraft Fu(t0) zum Zeitpunkt t0 und der Soll-Unterstützungskraftänderung ΔFu. Durch ein Absenken des Vordrucks wird automatisch in allen Radbremszylindern des Bremssystems der Bremsdruck p reduziert. Somit macht sich das Absenken des Vordrucks auch auf die nicht an den Generator angeschlossenen Räder bemerkbar. Auf diese Weise ist ein größeres Generatormoment verblendbar.

Wie anhand der oberen Ausführungen deutlich wird, ist die Regelung des hydraulischen Bremsdrucks/der hydraulischen Bremskraft mittels des Bremskraftverstärkers 14 einfach ausführbar. Wie anhand einer Betrachtung der Fig. 8C jedoch deutlich wird, ist eine derartige Änderung des hydraulischen Bremsdrucks/der hydraulischen Bremskraft herkömmlicher Weise auch mit einer Volumenänderung im Hauptbremszylinder 22 und/oder mit einer Verbiegung der Reaktionsscheibe 18 verbunden. (Zur Veranschaulichung ist die "Form" der Reaktionsscheibe 18 zum Zeitpunkt t0 als gestrichelte Linie 24 in die Ersatzmodelle der Fig. 8C und 8D eingetragen. Es ist vorteilhaft, auch diesen Effekt bei den weiteren Verfahrensschritten zu berücksichtigen.) Damit der erste Verstellweg s1, und damit die Stellung des Bremseingabeelements 10, jedoch unverändert bleibt, ist es vorteilhaft, wenn gilt:

$$\text{(Gl 9)} \quad s1(t2) = s1(t0)$$

Dies ist über die nachfolgend beschriebene Volumenregulierung im Bremssystem, realisierbar durch einen Plunger und/oder einen Zwei-Kammern-Zylinder, in den Verfahrensschritten S4 und S5 ausführbar. Beispielsweise kann auf diese Weise ein Rückstoß des Bremseingabeelements 10 unterbunden werden.

Die Änderung des Volumens im Hauptbremszylinder 22 kann man leicht über die Druck-Volumen-Kennlinie, die sogenannte pV-Kennlinie der Räder auslesen/berechnen. (Die pV-Kennlinie der einzelnen Räder kann auch gut eingeschätzt werden.) Auf diese Weise lässt sich ein Zusammenhang zwischen der Volumenänderung V(t0→t1) und der Verschiebung Δs3 der verstellbaren Komponente des Hauptbremszylinders 22 (siehe Fig. 8C) herleiten, wobei gilt:

$$\text{(Gl 10)} \qquad \Delta s3 = V(t0 \to t1)/ A$$

In einer vorteilhaften Ausführungsform des hier beschriebenen Verfahrens kann jedoch trotz dieser aufgrund der Volumenänderung V(t0→t1) bewirkten Verschiebung Δs3 des Ausgangskolbens 20 der erste Verstellweg s1 des Bremseingabeelements 10 konstant gehalten werden. Dies erfolgt unter Berücksichtigung der oben bereits hergeleiteten Gleichung (Gl 3). In dem Verfahrensschritt S3 wird beispielsweise als eine Soll-Volumenverschiebungsgröße eine Soll-Volumenänderung/Soll-Volumenverschiebung des Bremsmediums zwischen der mindestens einen Speicherkammer des mindestens einen Plungers und/oder des mindestens einen Zwei-Kammern-Zylinders und dem speicherexternen Volumen festgelegt. Vorzugsweise wird die Soll-Volumenänderung ΔV anhand der vorhergehenden Gleichungen (Gl 1) bis (Gl 3) so festgelegt, dass gilt:

$$\text{(Gl 11)} \quad \Delta V = A * (\Delta s3 + x * \Delta Fu/C)$$

Somit kann bei der Festlegung der Soll-Volumenänderung ΔV vorteilhafter Weise berücksichtigt werden, dass die Änderung der Unterstützungskraft entsprechend der Soll-Unterstützungskraftänderung ΔFu eine Änderung der Volumenaufnahme des Bremssystems um V(t0→t1) oder Δs3 bewirkt, und (aufgrund der Elastizität e der Reaktionsscheibe 18) eine Deformation der Reaktionsscheibe 18 auslöst. Die beiden Effekte sind gegenläufig, weshalb beispielsweise ein positives Δs3 zu einem negativen Term (x * ΔFu/ C) führt.

Damit die Gleichung (Gl 9) eingehalten wird, wird die in Gleichung (Gl 11) hergeleitete Soll-Volumenänderung ΔV über ein geeignetes Ansteuern des mindestens einen Bremsmediumförderelements des Bremssystems in dem Verfahrensschritt S3 ausgeführt. Beispielsweise wird, um nicht nur die Verzögerung sondern auch den Pedalweg bei gleicher Fahrerbremskraft Ff konstant zu halten, die in Gleichung (Gl 11) festgelegte Soll-Volumenänderung ΔV zwischen der mindestens einen Speicherkammer des mindestens einen Plungers und/oder des mindestens einen Zwei-Kammern-Zylinders und dem speicherexternen Volumen des Bremssystems verschoben.

Fig. 8D zeigt den Koppelmechanismus zum Zeitpunkt t2 nach einem Ausführen der Soll-Volumenänderung ΔV durch eine für eine Umverteilung des Bremsmediums in dem Bremskreis geeignete Komponente des Bremssystems. Dabei entspricht der Verstellweg s1(t2) zum Zeitpunkt t2 vorzugsweise dem zum Zeitpunkt t0 vorgegebenen Verstellweg s1(t0), d.h. es gilt: s1(t2) = s1 (t0).

Wie der Fachmann erkennt, können die in den oberen Absätzen beschriebenen Verfahrensschritte so schnell ausgeführt werden, dass das Zeitintervall zwischen den Zeitpunkten t0 und t2 gegen Null geht. Damit bleibt der erste Verstellweg s1 zeitlich konstant. Somit ist über das Ausführen des beschriebenen Verfahrens trotz des Zusatz-Bremsmoments Mz ungleich Null bei einer zeitlich konstanten Fahrerbremskraft Ff auch ein zeitlich konstanter erster Verstellweg s1 gewährleistet. Der Fahrer merkt somit nichts von der Aktivierung des Zusatz-Bremsmoments Mz. Das in den oberen Absätzen beschriebene Verfahren gewährleistet somit einen verbesserten Fahrkomfort für den Fahrer.

Ebenso werden bei dem hier beschriebenen Verfahren die Konstanthaltung der Verzögerung des Fahrzeugs und die Konstanthaltung des ersten Verstellwegs s1 entkoppelt und unabhängig voneinander durchgeführt.

Der Prozentsatz der möglichen Rekuperationsfähigkeit mittels des oben beschriebenen Verfahrens ergibt sich aus dem Verstärkungsfaktor γ des Bremskraftverstärkers 14. Die maximale Rekuperationsfähigkeit ist erreicht, wenn die Unterstützungskraft Fu gleich Null wird und nur die Fahrerbremskraft Ff als Gesamtbremskraft Fg in den Hauptbremszylinder 22 hineinbremst. Somit kann man die Gesamtbremskraft Fg maximal um den Faktor γ/(γ +1) reduzieren. Verstärkt der Bremskraftverstärker beispielsweise maximal um den Faktor γ = 4, so liegt der Prozentsatz der maximal möglichen Rekuperationfähigkeit bei 80 %.

Nachfolgend wird eine optionale Erweiterung des Verfahrens für eine 100 prozentige Rekuperation beschrieben:

Ist der als Grenz-Rekuperationsgrad bezeichenbare Rekuperationsgrad erreicht, an welchem die Unterstützungskraft zu Null wird und das hydraulische Bremsmoment allein durch die Fahrerbremskraft Ff aufgebracht wird, so kann die hydraulische Bremsdruckreduktion an den Rädern mit einer Regelung, wie sie beispielsweise im ABS/ESP-Gerät verwendet wird, eingestellt werden. Dies erfolgt durch Schließen der Einlassventile und Abbau des Raddrucks über die Auslassventile, wobei beispielsweise die Speicherkammer des ABS/ESP-Systems gefüllt wird. Wenn die Einlassventile geschlossen sind, so ändert sich das Volumen im Bremssystem zwischen den Einlassventilen und dem Hauptbremszylinder 22 nicht. Der in dem Hauptbremszylinder 22 vorliegende Druck bleibt deshalb konstant. Somit kommt es auch nicht zu einer Änderung des ersten Verstellwegs s1. Der Fahrer spürt damit nichts von den nachfolgend beschriebenen Verfahrensschritten über eine Rückwirkung an dem Bremseingabeelement. Die in diesem Absatz beschriebenen Verfahrensschritte können selbstverständlich vor einem Erreichen des Grenz-Rekuperationsgrads, insbesondere wenn der Grenz-Rekuperationsgrad fast erreicht ist, ausgeführt werden. Beispielsweise kann das Schließen des Einlassventils bereits vor einem Erreichen des Grenz-Rekuperationsgrads erfolgen, so dass eine Restkraft des Bremskraftverstärkers weiterhin ausgeübt wird.

Als Alternative zu dem Schließen der Einlassventile kann man statt dieses harten Übergangs beim Grenz-Rekuperationsgrad auch einen weichen Übergang ausführen. In diesem Fall werden die Einlassventile schon vor dem Erreichen des Grenz-Rekuperationsgrads in einem geregelten Betriebsmodus aktiviert, welcher als Δp-Regelung bekannt ist. In diesem Betriebsmodus ist es insbesondere möglich, Differenzdrücke beziehungsweise Volumenströme komfortabel zu regeln/zu steuern. Somit kann die Rückwirkung auf den Fahrer per Pedal oder per Geräusch deutlich reduziert werden. Erst bei einem Erreichen des Grenz-Rekuperationsgrads wird in diesem Fall das mindestens eine Einlassventil vollständig geschlossen, um den ersten Verstellweg s1 konstant zu halten.

Für einen Druckaufbau bei geschlossenen Einlassventilen können die folgenden Verfahrensschritte ausgeführt werden: Anfangs ist ein bestimmtes Volumen zwischen dem Hauptbremszylinder 22 und den Einlassventilen unter einem bestimmten Druck eingeschlossen. Wird nach dem Schließen der Einlassventile der Raddruck weiter reduziert, beispielsweise um ein weiteres Generator-Bremsmoment zu verblenden, so ist der zwischen dem Hauptbremszylinder und den Einlassventilen eingeschlossene Druck größer als der Raddruck. In diesem Fall ist es vorteilhaft, das System derart anzusteuern/anzuregeln, dass sich die Menge des Volumens von dem Hauptbremszylinder bis zu den Einlassventilen nicht ändert, da in diesem Fall eine Rückwirkung auf den Pedalweg unterbunden ist. Dies bedeutet, dass man die Rückförderpumpe und/oder Ein- und Auslassventile bei einem anschließenden Druckaufbau derart ansteuert, dass das so verschobene Volumen lediglich zum Druckaufbau im Rad beiträgt. Dies kann derart erfolgen, dass der Druckaufbau dem Reduzieren des Generatormoments entspricht. Erleichtert wird dies dadurch, dass der eingeschlossene Druck zwischen dem Hauptbremszylinder 22 und den Einlassventilen größer als der Raddruck ist und somit Volumen über das Einlassventil beziehungsweise mittels der Δp-Regelung leicht zu den Radbremszylindern verschiebbar ist.

Der in dieser Anmeldung genannte Bremskraftverstärker 14 bzw. 58 ist in bevorzugter Weise ein steuerbarer und/oder regelbarer Bremskraftverstärker. Die Unterstützungskraft des Bremskraftverstärkers kann somit abhängig von der Fahrerbremskraft, als auch unabhängig von einer Fahrerbremskraft eingestellt werden.

Unter einer Kopplung des Bremskraftverstärkers zusammen mit dem Eingangskolben 12 an ein Kraft-Einkoppelelement, wie beispielsweise die gezeigte Reaktionsscheibe 18, ist das Beaufschlagen des Kraft-Einkoppelelements mit einer Kraft gemeint. Eine mechanische Kopplung im Sinne einer Verbindung des Kraft-Einkoppelelements mit dem Bremskraftverstärkers sowie dem Eingangskolben 12 ist nicht zwingend notwendig. Ebenso ist es möglich dass beispielsweise zwischen dem Kraft-Einkoppelelement und dem Eingangskolben 12 ein Leerweg vorhanden ist, insbesondere zu Anfang einer Betätigung eines Bremspedals.

**Patentansprüche**

1. Verfahren zum Betreiben eines bremskraftverstärkten hydraulischen Bremssystems eines Fahrzeugs mit den Schritten:

    Ermitteln einer Information (27) bezüglich einer Zu- oder Abnahme mindestens einer zusätzlich zu einer hydraulischen Bremskraft des Bremssystems auf mindestens ein Rad (60) des Fahrzeugs ausgeübten Zusatz-Bremskraft,
    Ändern einer Unterstützungskraft (Fu), welche von einem Bremskraftverstärker (14, 58) bereitgestellt wird, um eine Kraftdifferenz unter Berücksichtigung der ermittelten Information (27) so, dass die hydraulische Bremskraft korrespondierend zu der Zu- oder Abnahme der Zusatz-Bremskraft geändert wird (S2); und
    Verschieben eines Volumens eines Bremsmediums des Bremssystems zwischen mindestens einer Speicherkammer (100, 154) und einem speicherexternen Volumen des Bremssystems unter Berücksichtigung der ermittelten Information (27) so, dass eine Ausgleichkraft korrespondierend zu der Kraftdifferenz auf ein Bremseingabeelement (10, 56) des Bremskraftverstärkers (14,58) ausgeübt wird (S3), wobei insbesondere die Speicherkammer (100, 154) die Speicherkammer mindestens eines Plungers (88a, 88a', 88b, 90) und/oder mindestens eines Zwei-Kammern-Zylinders (150) ist.

2. Verfahren nach Anspruch 1, wobei als Information (27) eine Information (27) bezüglich zumindest einer Zu- oder Abnahme eines Generator-Bremsmoments, einer Reibungskraft und/oder einer Hangabtriebskraft ermittelt wird, und wobei die Unterstützungskraft (Fu) um eine die Zu- oder Abnahme des Generator-Bremsmoments, der Reibungskraft und/oder der Hangabtriebskraft kompensierende Kraftdifferenz geändert wird.

3. Verfahren nach Anspruch 1 oder 2, wobei als Information (27) ermittelt wird, ob das Fahrzeug im Stillstand vorliegt, und wobei, sofern das Fahrzeug im Stillstand mit einer als der mindestens einen Zusatz-Bremskraft wirkenden Haftreibungskraft vorliegt, die Unterstützungskraft (Fu) um eine Kraftdifferenz gleich der Unterstützungskraft (Fu) reduziert wird.

4. Steuervorrichtung (25) für ein bremskraftverstärktes hydraulisches Bremssystem eines Fahrzeugs mit:

    einer Eingabeeinrichtung (26), welche dazu ausgelegt ist, eine Information (27) bezüglich einer Zu- oder Abnahme mindestens einer zusätzlich zu einer hydraulischen Bremskraft des Bremssystems auf mindestens ein Rad (60) des Fahrzeugs ausgeübten Zusatz-Bremskraft zu empfangen, und mindestens ein der Information (27) entsprechendes Empfangssignal (28) bereitzustellen;
    einer ersten Auswerteeinrichtung (29), welche dazu ausgelegt ist, eine Soll-Kraftänderungsgröße bezüglich einer Soll-Änderung einer Unterstützungskraft (Fu), welche von einem Bremskraftverstärker (14, 58) bereitstellbar ist, unter Berücksichtigung des mindestens einen Empfangssignals (28) festzulegen;
    einer ersten Ansteuereinrichtung (31), welche dazu ausgelegt ist, ein der festgelegten Soll-Kraftänderungsgröße entsprechendes erstes Steuersignal (32) an den Bremskraftverstärker (14, 58) auszugeben, so dass die Unterstützungskraft (Fu) um eine der festgelegten Soll-Kraftänderungsgröße entsprechende Kraftdifferenz und die hydraulische Bremskraft korrespondierend zu der Zu- oder Abnahme der Zusatz-Bremskraft änderbar sind;
    einer zweiten Auswerteeinrichtung (34), welche dazu ausgelegt ist, eine Soll-Volumenverschiebungsgröße bezüglich einer Soll-Volumenverschiebung eines Bremsmediums des Bremssystems zwischen mindestens einer Speicherkammer (100, 154) und einem speicherexternen Volumen des Bremssystems unter Berücksichtigung des mindestens einen Empfangssignals (28) festzulegen, wobei insbesondere die Speicherkammer (100,154) die Speicherkammer mindestens eines Plungers (88a, 88a', 88b, 90) und/oder mindestens eines Zwei-Kammern-Zylinders (150) ist; und einer zweiten Ansteuereinrichtung (36), welche dazu ausgelegt ist, ein der festgelegten Soll-Volumenverschiebungsgröße entsprechendes zweites Steuersignal (37) an mindestens ein Bremsmediumförderelement (104, 78b, 156) des Bremssystems auszugeben, so dass ein Volumen des Bremsmediums entsprechend der festgelegten Soll-Volumenverschiebungsgröße zwischen der mindestens einen Speicherkammer (100, 154) und dem speicherexternen Volumen des Bremssystems verschiebbar und eine Ausgleichkraft korrespondierend zu der Kraftdifferenz auf das Bremseingabeelement (10, 56) ausübbar sind.

5. Steuervorrichtung (25) nach Anspruch 4, wobei die zweite Ansteuereinrichtung (36) dazu ausgelegt ist, mittels des zweiten Steuersignals (37) mindestens einen Plunger-Motor (104) als das mindestens eine Bremsmediumförderelement (104) anzusteuern.

6. Steuervorrichtung (25) nach Anspruch 4 oder 5, wobei die zweite Ansteuereinrichtung (36) dazu ausgelegt ist, mittels des zweiten Steuersignals (37) mindestens eine Pumpe (78b) und/oder mindestens ein Ventil (156) als das mindestens eine Bremsmediumförderelement (78b, 156) unter Berücksichtigung der festgelegten Soll-Volumenverschiebungsgröße anzusteuern.

7. Bremskraftverstärktes hydraulisches Bremssystem mit:

einem ein Kraft-Einkoppelelement (18) mit einer Unterstützungskraft (Fu) beaufschlagenden Bremskraftverstärker (14, 58);
mindestens einem Plunger (88a, 88a', 88b, 90) und/oder mindestens einem Zwei-Kammern-Zylinder (150); und
einer Steuervorrichtung (25) nach einem der Ansprüche 4 bis 6.

8. Bremskraftverstärktes hydraulisches Bremssystem nach Anspruch 7, wobei der mindestens eine Plunger (88a') eine selbsthemmende Ankopplung (110) einer verstellbaren Wandkomponente (102) einer Plunger-Speicherkammer (100) an einen Plunger-Motor (104) umfasst.

9. Bremskraftverstärktes hydraulisches Bremssystem nach Anspruch 7 oder 8, wobei das Bremssystem mindestens eine eingangsseitig an dem mindestens einen Plunger (88a) angeordnete Ventileinheit (108) umfasst.

10. Bremskraftverstärktes hydraulisches Bremssystem nach Anspruch 7, **dadurch gekennzeichnet, dass** der Bremskraftverstärker (14, 58) ein steuerbarer und/oder regelbarer Bremskraftverstärker (14, 58) ist, insbesondere ein Bremskraftverstärker dessen Unterstützungskraft unabhängig von einer Fahrerkraft eingestellt werden kann.

11. Fahrzeug mit einer Steuervorrichtung (25) nach einem der Ansprüche 4 bis 6 und/oder einem bremskraftverstärkten hydraulischen Bremssystem nach einem der Ansprüche 7 bis 10.

**Claims**

1. Method for operating a boosted hydraulic brake system of a vehicle having the steps:

determining an item of information (27) relating to an increase or decrease of at least one additional braking force which is applied, in addition to a hydraulic braking force of the brake system, to at least one wheel (60) of the vehicle
changing an assistance force (Fu) which is made available by a booster (14, 58), by a force difference taking into account the determined information (27) in such a way that the hydraulic braking force is changed in a way corresponding to the increase or decrease in the additional braking force (S2); and
moving a volume of a braking medium of the brake system between at least one storage chamber (100, 154) and a storage-external volume of the brake system taking into account the determined information (27), in such a way that an equalization force corresponding to the force difference is applied to a brake input element (10, 56) of the booster (14, 58) (S3), wherein, in particular, the storage chamber (100, 154) is the storage chamber of at least one plunger (88a, 88a', 88b, 90) and/or at least one two-chamber cylinder (150).

2. Method according to Claim 1, wherein an item of information (27) relating to at least one increase or decrease in a generator braking torque, a friction force and/or a downhill slope force is determined as information (27), and wherein the assistance force (Fu) is changed by a force difference which compensates the increase or decrease in the generator braking torque, the friction force and/or the downhill slope force.

3. Method according to Claim 1 or 2, wherein as information (27) it is determined whether the vehicle is in the stationary state, and wherein, if the vehicle is in the stationary state with a downhill slope force acting as the at least one additional braking force, the assistance force (Fu) is reduced by a force difference equal to the assistance force (Fu).

4. Control device (25) for a boosted hydraulic brake system of a vehicle, having:

an input device (26) which is configured to receive an item of information (27) relating to an increase or decrease in at least one additional braking force, applied in addition to a hydraulic braking force of the brake system, to at least one wheel (60) of the vehicle, and to make available at least one reception signal (28) which corresponds to the information (27);
a first evaluation device (29) which is configured to define a setpoint force change variable relating to a setpoint change in an assistance force (Fu), which can be made available by a booster (14, 58), taking into account the at least one reception signal (28);
a first actuation device (31) which is configured to output to the booster (14, 58) a first control signal (32) which corresponds to the defined setpoint force change variable, with the result that the assistance force (Fu) can be changed by a force difference, corresponding to the defined setpoint force change variable, and the hydraulic braking force can be changed in a way corresponding to the increase or decrease in the additional braking force;
a second evaluation device (34) which is configured to define a setpoint volume movement variable relating to a setpoint volume movement of a braking medium of the brake system between at least one storage chamber (100, 154) and a storage-external volume of the brake system taking into account the at least one reception signal (28), wherein, in particular, the storage chamber (100, 154) is the storage chamber of at least one plunger (88a, 88a', 88b, 90) and/or of at least one two-chamber cylinder (150); and
a second actuation device (36) which is configured to output a second control signal (37), corresponding to the defined setpoint volume movement variable, to at least one braking medium-delivery element (104, 78b, 156) of the brake system, with the result that a volume of the braking medium corresponding to the defined setpoint volume movement variable can be moved between the at least one storage chamber (100, 154) and the storage-external volume of the brake system, and an equalization force corresponding to the force difference can be applied to the brake input element (10, 56).

5. Control device (25) according to Claim 4, wherein the second actuation device (36) is configured to actuate, by means of the second control signal (37), at least one plunger motor (104) as the at least one braking medium-delivery element (104).

6. Control device (25) according to Claim 4 or 5, wherein the second actuation device (36) is configured to actuate, by means of the second control signal (37), at least one pump (78b) and/or at least one valve (156) as the at least one braking medium-delivery element (78b, 156) taking into account the defined setpoint volume movement variable.

7. Boosted hydraulic brake system having:

a booster (14, 58) which applies an assistance force (Fu) to a force input element (18);
at least one plunger (88a, 88a', 88b, 90) and/or at least one two-chamber cylinder (150); and
a control device (25) according to one of Claims 4 to 6.

8. Boosted hydraulic brake system according to Claim 7, wherein the at least one plunger (88a') comprises a self-blocking coupling (110) of an adjustable wall component (102) of a plunger storage chamber (100) to a plunger motor (104).

9. Boosted hydraulic brake system according to Claim 7 or 8, wherein the brake system comprises at least one valve unit (108) which is arranged on the input side on the at least one plunger (88a).

10. Boosted hydraulic brake system according to Claim 7, **characterized in that** the booster (14, 58) is an open-loop controllable and/or closed-loop controllable booster (14, 58), in particular a booster whose assistance force can be set independently of a driver force.

11. Vehicle having a control device (25) according to one of Claims 4 to 6 and/or a boosted hydraulic brake system according to one of Claims 7 to 10.

**Revendications**

1. Procédé pour faire fonctionner un système de freinage hydraulique assisté d'un véhicule, comprenant les étapes suivantes :

   déterminer une information (27) relative à une augmentation ou une diminution d'au moins une force de freinage supplémentaire exercée en plus d'une force de freinage hydraulique du système de freinage sur au moins une roue (60) du véhicule,
   modification d'une force d'assistance (Fu) qui est fournie par un servofrein (14, 58) d'une différence de force en tenant compte de l'information déterminée (27) de telle sorte que la force de freinage hydraulique soit modifiée de manière correspondant à l'augmentation ou à la diminution de la force de freinage supplémentaire (S2) ; et
   déplacement d'un volume d'un fluide de frein du système de freinage entre au moins une chambre de stockage (100, 154) et un volume extérieur au stockage du système de freinage en tenant compte de l'information déterminée (27) de telle sorte qu'une force de compensation soit exercée (S3) de manière correspondant à la différence de force sur un élément de demande de freinage (10, 56) du servofrein (14, 58), la chambre de stockage (100, 154) étant notamment la chambre de stockage d'au moins un plongeur (88a, 88a', 88b, 90) et/ou d'au moins un cylindre à deux chambres (150).

2. Procédé selon la revendication 1, dans lequel on détermine en tant qu'information (27) une information (27) relative à au moins une augmentation ou une diminution d'un couple de freinage d'un générateur, d'une force de friction et/ou d'une force descensionnelle, et dans lequel la force d'assistance (Fu) est modifiée d'une différence de force compensant l'augmentation ou la diminution du couple de freinage du générateur, de la force de friction et/ou de la force descensionnelle.

3. Procédé selon la revendication 1 ou 2, dans lequel on détermine en tant qu'information (27) si le véhicule est à l'arrêt, et dans lequel, si le véhicule est à l'arrêt avec une force de friction d'adhérence agissant en tant que l'au moins une force de freinage supplémentaire, la force d'assistance (Fu) est réduite d'une différence de force égale à la force d'assistance (Fu).

4. Dispositif de commande (25) pour un système de freinage hydraulique assisté d'un véhicule, comprenant :

   un dispositif de saisie (26) qui est conçu pour recevoir une information (27) relative à une augmentation ou une diminution d'au moins une force de freinage supplémentaire exercée en plus d'une force de freinage hydraulique du système de freinage sur au moins une roue (60) du véhicule, et pour fournir au moins un signal de réception (28) correspondant à l'information (27) ;
   un premier dispositif d'analyse (29) qui est conçu pour fixer, en tenant compte de l'au moins un signal de réception (28), une grandeur de modification d'une force de consigne relative à une variation de consigne d'une force d'assistance (Fu) qui peut être fournie par un servofrein (14, 58) ;
   un premier dispositif de commande (31) qui est conçu pour délivrer au servofrein (14, 58) un premier signal de commande (32) correspondant à la grandeur de modification de la force de consigne fixée, de telle sorte que la force d'assistance (Fu) puisse être modifiée d'une différence de force correspondant à la grandeur de modification de la force de consigne fixée et que la force de freinage hydraulique puisse être modifiée de manière correspondant à l'augmentation ou à la diminution de la force de freinage supplémentaire ;
   un deuxième dispositif d'analyse (34) qui est conçu pour fixer une grandeur de déplacement de volume de consigne relative à un déplacement de volume de consigne d'un fluide de frein du système de freinage entre au moins une chambre de stockage (100, 154) et un volume extérieur au stockage du système de freinage en tenant compte de l'au moins un signal de réception (28), la chambre de stockage (100, 154) étant notamment la chambre de stockage d'au moins un plongeur (88a, 88a', 88b, 90) et/ou d'au moins un cylindre à deux chambres (150) ; et
   un deuxième dispositif de commande (36) qui est conçu pour délivrer à au moins un élément de transport de fluide de frein (104, 78b, 156) du système de freinage un deuxième signal de commande (37) correspondant à la grandeur de déplacement de volume de consigne fixée, de telle sorte qu'un volume de fluide de frein puisse être déplacé de manière correspondant à la grandeur de déplacement de volume de consigne fixée entre l'au moins une chambre de stockage (100, 154) et le volume extérieur au stockage du système de freinage et qu'une force de compensation puisse être exercée de manière correspondant à la différence de force appliquée sur l'élément de demande de freinage (10, 56).

5. Dispositif de commande (25) selon la revendication 4, dans lequel le deuxième dispositif de commande (36) est conçu de manière à commander, au moyen du deuxième signal de commande (37), au moins un moteur de plongeur (104) en tant que l'au moins un élément de transport de fluide de frein (104).

6. Dispositif de commande (25) selon la revendication 4 ou 5, dans lequel le deuxième dispositif de commande (36) est conçu de manière à commander, au moyen du deuxième signal de commande (37), au moins une pompe (78b) et/ou au moins une soupape (156) en tant que l'au moins un élément de transport de fluide de frein (78b, 156) en tenant compte de la grandeur de déplacement de volume de consigne fixée.

7. Système de freinage hydraulique assisté, comprenant :

   un servofrein (14, 58) sollicitant un élément d'apport de force (18) avec une force d'assistance (Fu) ;
   au moins un plongeur (88a, 88a', 88b, 90) et/ou au moins un cylindre à deux chambres (150) ; et
   un dispositif de commande (25) selon l'une quelconque des revendications 4 à 6.

8. Système de freinage hydraulique assisté selon la revendication 7, dans lequel l'au moins un plongeur (88a') comprend un couplage autobloquant (110) d'un composant de paroi déplaçable (102) d'une chambre de stockage de plongeur (100) à un moteur de plongeur (104).

9. Système de freinage hydraulique assisté selon la revendication 7 ou 8, dans lequel le système de freinage comprend au moins une unité de soupape (108) disposée du côté de l'entrée au niveau de l'au moins un plongeur (88a).

10. Système de freinage hydraulique assisté selon la revendication 7, **caractérisé en ce que** le servofrein (14, 58) est un servofrein (14, 58) commandable et/ou réglable, notamment un servofrein dont la force d'assistance peut être ajustée indépendamment d'une force du conducteur.

11. Véhicule comprenant un dispositif de commande (25) selon l'une quelconque des revendications 4 à 6 et/ou un système de freinage hydraulique assisté selon l'une quelconque des revendications 7 à 10.

## Fig. 1A
(Stand der Technik)

16    Fu    14

Fg

22    21    20    12    Ff    10

18    16

## Fig. 1B
(Stand der Technik)

P2    16    Fu

x

Fg    P3
e

s2

s3    20    1    18

s1

Ff

P1    12

**Fig. 2**

**Fig. 3**

Fig. 4

# Fig. 5

# Fig. 6

Fig. 7

EP 2 536 604 B1

## Fig. 8A

## Fig. 8B

## Fig. 8C

$t = t1 > t0$

## Fig. 8D

$t = t2 > t1$

**EP 2 536 604 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090115242 A1
- DE 102005024577 A1
- DE 10057557 A1
- DE 10327553 A1
- DE 102007030441 A1